# EUROPEAN PATENT SPECIFICATION

(11) **EP 3 399 400 B1**
(45) Date of publication and mention of the grant of the patent: **08.07.2020**
(21) Application number: 17736149.0
(22) Date of filing: 06.01.2017
(51) Int. Cl.: G06F 3/0488, G06F 3/041, H04M 1/725, G06F 3/0482, G06F 3/0484

(54) **DEVICE FOR PROVIDING USER INTERFACE BY USING PRESSURE SENSOR AND SCREEN IMAGE CONFIGURATION METHOD THEREFOR**
VORRICHTUNG ZUR BEREITSTELLUNG EINER BENUTZERSCHNITTSTELLE DURCH VERWENDUNG EINES DRUCKSENSORS UND BILDSCHIRMBILDKONFIGURATIONSVERFAHREN DAFÜR
DISPOSITIF FOURNISSANT UNE INTERFACE UTILISATEUR AU MOYEN D'UN CAPTEUR DE PRESSION ET PROCÉDÉ DE CONFIGURATION D'IMAGE D'ÉCRAN ASSOCIÉ

(30) Priority: 06.01.2016 KR 20160001721
(43) Date of publication of application: 07.11.2018
(73) Proprietor: Samsung Electronics Co., Ltd., Suwon-si, Gyeonggi-do 16677 (KR)
(72) Inventor: JUNG, Won-Heui, Seoul 06245 (KR)
(74) Representative: HGF
(86) International application number: PCT/KR2017/000216
(87) International publication number: WO 2017/119777

(56) References cited:
- KR-A- 20110 047 349
- KR-A- 20110 049 031
- KR-A- 20120 103 075
- KR-A- 20150 068 330
- US-A1- 2006 132 455
- US-A1- 2009 228 842
- US-A1- 2015 067 519

## Description

### [Technical Field]

The present disclosure generally relates to an apparatus for providing user interface and a method of configuring a screen of the same and, more particularly, to an apparatus for providing a user interface of entering a text selection state in response to force press input and selecting each of a plurality of words through tap input and a method of configuring a screen of the same.

### [Background Art]

Recently, the dissemination of electronic devices, such as smart phones or tablet Personal Computers (PCs) has increased. A smart phone or a tablet PC include a touch screen as an input means, and a user may execute and control an application through a touch on the touch screen.

The electronic device such as the smart phone or the tablet PC may display text such as words or numbers through a display. In a conventional method of selecting text displayed through the display, text may be selected by selecting the first part of the text and the last part of the text.

However, in the conventional method of selecting text, when text from the first part to the last part is selected, the intermediate part of the text therebetween, which the user does not desire to select, is selected together.

Accordingly, a method of separately selecting only parts of text, which the user desires to select and providing various functions for the selected parts of text is required.

US 2006/0132455 discloses a graphical interface with pressure-sensitive tools such that different levels of applied pressure cause different amounts of the document to be selected.

US 2015/0067519 discloses detection of a gesture on a touch sensitive display, comprising detecting contact on the touch-sensitive display over a graphical object, and in dependence on predetermined intensity criteria, removing the graphical object from the frame or adjusting its appearance.

KR 2011/0049031 discloses a mobile terminal in which information included in an area selected by a user can be automatically applied to an application selected in a pop-up menu and executed.

### [Detailed Description of the Invention]

### [Technical Problem]

The invention is as set out in the independent claims, further aspects of the invention are outlined in the dependent claims. Embodiments that do not fall within the scope of the claims do not describe part of the invention. Various embodiments according to the concept of the present disclosure provide an apparatus for providing a user interface, which enter a text selection state in response to force press input, select each of words through tap input, and perform a function for each of the selected words, and a method of configuring a screen of the same.

### [Technical Solution]

An apparatus for providing a user interface according to an embodiment of the present disclosure includes: a touch screen; a pressure sensor configured to detect pressure applied to the touch screen; and a processor, wherein the processor is configured, when pressure by a first gesture input to the touch screen is smaller than or equal to a predetermined value, to perform a first function corresponding to the first gesture, and when the pressure by the first gesture input to the touch screen is larger than the predetermined value, to enter a first state for selecting each of a plurality of words in text displayed on the touch screen and perform a second function corresponding to the first gesture.

A method of configuring a screen of a user interface providing apparatus according to an embodiment of the present disclosure includes: detecting pressure by a first gesture applied to a touch screen; when the pressure by the first gesture input to the touch screen is smaller than or equal to a predetermined value, performing a first function corresponding to the first gesture; and when the pressure by the first gesture input to the touch screen is larger than the predetermined value, entering a first state for selecting each of a plurality of words in text displayed on the touch screen and performing a second function corresponding to the first gesture.

### [Advantageous Effects]

An apparatus for providing a user interface and a method of configuring a screen of the same according to various embodiments have effects of entering a text selection state in response to force press input, selecting each of a plurality of words, which a user desires, through tap input in the text selection state, and performing various functions for each of the selected words.

### [Brief Description of Drawings]

The above and other aspects, features, and advantages of the present disclosure will be more apparent from the following detailed description taken in conjunction with the accompanying drawings, in which:
FIG. 1 is a block diagram illustrating an electronic device and a network according to various embodiments of the present disclosure;
FIG. 2 is a block diagram of an electronic device according to various embodiments of the present disclosure;
FIG. 3 is a block diagram of a program module according to various embodiments of the present disclosure;
FIG. 4 is a block diagram schematically illustrating a user interface providing device according to various embodiments of the present disclosure;
FIG. 5 is a flowchart illustrating a method of configuring a screen of the user interface providing device according to various embodiments of the present disclosure;
FIG. 6 is a flowchart illustrating a method of configuring a screen of the user interface providing device according to various embodiments of the present disclosure;
FIG. 7 is a flowchart illustrating a method of configuring a screen of the user interface providing device according to various embodiments of the present disclosure;
FIGs. 8A to 8F are block diagrams illustrating a method of configuring the screen of the user interface providing device according to various embodiments of the present disclosure;
FIG. 9 is a flowchart illustrating a method of configuring a screen of the user interface providing device according to various embodiments of the present disclosure;
FIGs. 10A to 10E are block diagrams illustrating the method of configuring the screen of the user interface providing device according to various embodiments of the present disclosure;
FIG. 11 is a flowchart illustrating a method of configuring a screen of the user interface providing device according to various embodiments of the present disclosure;
FIGs. 12A to 12E are block diagrams illustrating the method of configuring the screen of the user interface providing device according to various embodiments of the present disclosure;
FIG. 13 is a flowchart illustrating a method of configuring a screen of the user interface providing device according to various embodiments of the present disclosure;
FIGs. 14A and 14B are block diagrams illustrating the method of configuring the screen of the user interface providing device according to various embodiments of the present disclosure;
FIG. 15 is a flowchart illustrating a method of configuring a screen of the user interface providing device according to various embodiments of the present disclosure;
FIGs. 16A to 16C are block diagrams illustrating a method of configuring the screen of the user interface providing device according to various embodiments of the present disclosure;
FIG. 17 is a flowchart illustrating a method of configuring a screen of the user interface providing device according to various embodiments of the present disclosure;
FIGs. 18A and 18B are block diagrams illustrating a method of configuring a screen of the user interface providing device according to various embodiments of the present disclosure;
FIG. 19 is a flowchart illustrating a method of configuring a screen of the user interface providing device according to various embodiments of the present disclosure;
FIGs. 20A and 20B are block diagrams illustrating the method of configuring the screen of the user interface providing device according to various embodiments of the present disclosure;
FIG. 21 is a flowchart illustrating a method of configuring a screen of the user interface providing device according to various embodiments of the present disclosure; and
FIGs. 22A and 22B are block diagrams illustrating the method of configuring the screen of the user interface providing device according to various embodiments of the present disclosure.

### [Mode for Carrying out the Invention]

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of' according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., Central Processing Unit (CPU) or Application Processor (AP)) that can perform the corresponding operations by executing one or more software programs stored in a memory device.

The terms used in the present disclosure are only used to describe specific embodiments, and are not intended to limit the present disclosure. A singular expression may include a plural expression unless they are definitely different in a context. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit).

According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyrocompass), avionics, security devices, an automotive head unit, a robot for home or industry, an Automatic Teller's Machine (ATM) in banks, Point Of Sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments of the present disclosure will be described with reference to the accompanying drawings. In the present disclosure, the term "user" may indicate a person using an electronic device or a device (e.g., an artificial intelligence electronic device) using an electronic device.

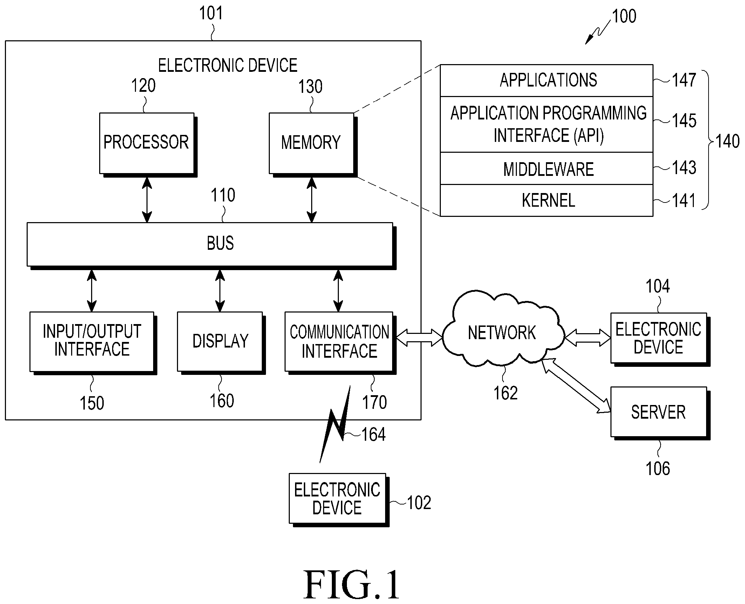

An electronic device 101 in a network environment 100 according to various embodiments will be described with reference to FIG. 1. The electronic device 101 may include a bus 110, a processor 120, a memory 130, an input/output interface 150, a display 160, and a communication interface 170. In some embodiments, the electronic device 101 may omit at least one of the above elements or may further include other elements.

The bus 110 may include, for example, a circuit that interconnects the components 110 to 170 and delivers communication (for example, a control message and/or data) between the components 110 to 170.

The processor 120 may include one or more of a Central Processing Unit (CPU), an Application Processor (AP), and a Communication Processor (CP). The processor 120, for example, may carry out operations or data processing relating to the control and/or communication of at least one other element of the electronic device 101.

The memory 130 may include volatile and/or non-volatile memory. The memory 130 may store, for example, instructions or data relevant to at least one other element of the electronic device 101. According to an embodiment, the memory 130 may store software and/or a program 140. The program 140 may include a kernel 141, middleware 143, an Application Programming Interface (API) 145, and/or applications (or "apps") 147. At least some of the kernel 141, the middleware 143, and the API 145 may be referred to as an Operating System (OS).

The kernel 141 may control or manage system resources (for example, the bus 110, the processor 120, or the memory 130) used for executing an operation or function implemented by other programs (for example, the middleware 143, the API 145, or the applications 147). Furthermore, the kernel 141 may provide an interface through which the middleware 143, the API 145, or the applications 147 may access the individual elements of the electronic device 101 to control or manage the system resources.

The middleware 143 may function as, for example, an intermediary for allowing the API 145 or the applications 147 to communicate with the kernel 141 to exchange data.

Furthermore, the middleware 143 may process one or more task requests, which are received from the applications 147, according to priorities thereof. For example, the middleware 143 may assign priorities for using the system resources (for example, the bus 110, the processor 120, the memory 130, or the like) of the electronic device 101, to at least one of the applications 147. For example, the middleware 143 may perform scheduling or loading balancing on the one or more task requests by processing the one or more task requests according to the priorities assigned to the one or more applications.

The API 145 is an interface through which the applications 147 control functions provided from the kernel 141 or the middleware 143, and may include, for example, at least one interface or function (for example, instruction) for file control, window control, image processing, or text control.

The input/output interface 150 may function as, for example, an interface that can forward instructions or data, which are input from a user or an external device, to the other element(s) of the electronic device 101. Furthermore, the input/output interface 150 may output instructions or data, which are received from the other element(s) of the electronic device 101, to the user or the external device.

The display 160 may include, for example, a Liquid Crystal Display (LCD), a Light Emitting Diode (LED) display, an Organic Light Emitting Diode (OLED) display, a Micro Electro Mechanical System (MEMS) display, or an electronic paper display. The display 160 may display, for example, various types of contents (for example, text, images, videos, icons, symbols, and the like) for a user. The display 160 may include a touch screen and may receive, for example, a touch, gesture, proximity, or hovering input using an electronic pen or the user's body part.

The communication interface 170, for example, may set communication between the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106).

The wireless communication may use, for example, at least one of Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), Global System for Mobile Communications (GSM), and the like, as a cellular communication protocol. In addition, the wireless communication may include, for example, short-range communication 164. The short-range communication 164 may include at least one of, for example, Wi-Fi, Bluetooth, Near Field Communication (NFC), Magnetic Stripe Transmission (MST), and Global Navigation Satellite System (GNSS). The GNSS may be, for example, a Global Positioning System (GPS), a Global navigation satellite system (Glonass), a BeiDou navigation satellite system (hereinafter, referred to as "BeiDou"), or Galileo (the European global satellite-based navigation system). Hereinafter, in this document, the term "GPS" may be interchangeable with the term "GNSS". The wired communication may include, for example, at least one of a Universal Serial Bus (USB), a High Definition Multimedia Interface (HDMI), Recommended Standard 232 (RS-232), a Plain Old Telephone Service (POTS), and the like. The network 162 may include a telecommunications network, for example, at least one of a computer network (for example, a LAN or a WAN), the Internet, and a telephone network.

Each of the first and second external electronic devices 102 and 104 may be of the same or a different type from the electronic device 101. According to an embodiment, the server 106 may include a group of one or more servers. According to various embodiments, all or some of the operations executed by the electronic device 101 may be executed by another electronic device, a plurality of electronic devices (for example, the electronic devices 102 and 104), or the server 106. According to an embodiment, when the electronic device 101 has to perform a function or service automatically or in response to a request, the electronic device 101 may request another device (for example, the electronic device 102 or 104, or the server 106) to perform at least some functions relating thereto, instead of autonomously or additionally performing the function or service. Another electronic apparatus may execute the requested functions or the additional functions, and may deliver a result of the execution to the electronic device 101. The electronic device 101 may provide the received result as it is, or may additionally process the received result to provide the requested functions or services. To this end, for example, cloud computing, distributed computing, or client-server computing technology may be used.

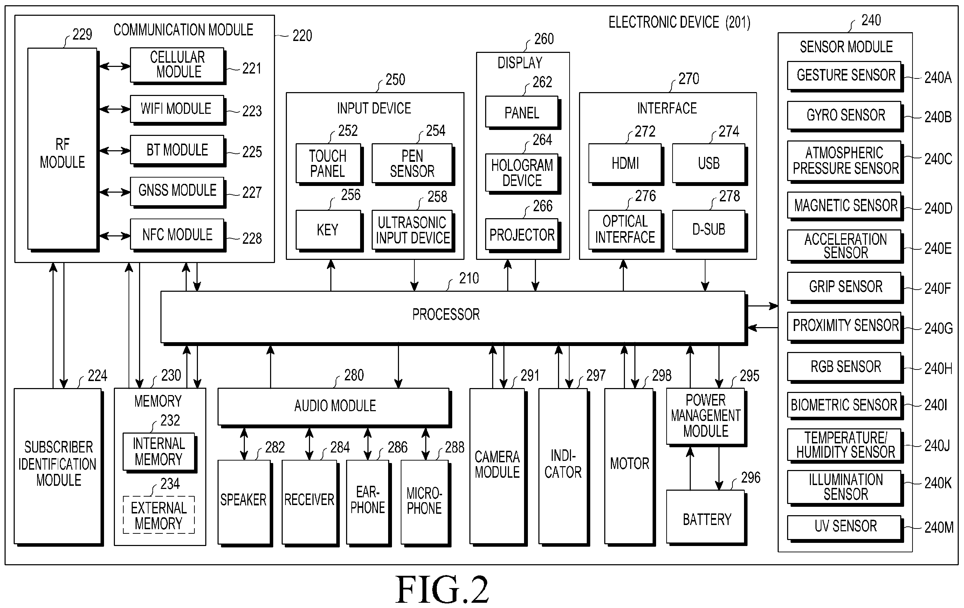

FIG. 2 is a block diagram 200 illustrating an electronic device 201 according to various embodiments. The electronic device 201 may include, for example, all or some of the electronic device 101 illustrated in FIG. 1. The electronic device 201 may include one or more Application Processors (APs) 210, a communication module 220, a Subscriber Identification Module (SIM) card 224, a memory 230, a sensor module 240, an input device 250, a display 260, an interface 270, an audio module 280, a camera module 291, a power management module 295, a battery 296, an indicator 297, and a motor 298.

The processor 210 may control a plurality of hardware or software elements connected to the processor 210 by running, for example, an Operating System (OS) or an application, and may perform processing and arithmetic operations of various types of data. The processor 210 may be implemented by, for example, a System on Chip (SoC). According to an embodiment, the processor 210 may further include a Graphic Processing Unit (GPU) and/or an image signal processor. The processor 210 may also include at least some of the elements illustrated in FIG. 2 (for example, a cellular module 221). The processor 210 may load, in a volatile memory, instructions or data received from at least one of the other elements (for example, a non-volatile memory) to process the loaded instructions or data, and may store various types of data in the non-volatile memory.

The communication module 220 may have a configuration identical or similar to that of the communication interface 170 illustrated in FIG. 1. The communication module 220 may include, for example, a cellular module 221, a Wi-Fi module 222, a Bluetooth module 223, a GNSS module 224 (for example, a GPS module, a Glonass module, a Beidou module, or a Galileo module), an NFC module 226, an MST module 226, and a Radio Frequency (RF) module 227.

The cellular module 221 may provide, for example, a voice call, a video call, a message service, or an Internet service through a communication network. According to an embodiment, the cellular module 221 may identify and authenticate the electronic device 201 within the communication network through a subscriber identification module (for example, a SIM card) 229. According to an embodiment, the cellular module 221 may perform at least some of the functions that the processor 210 may provide. According to an embodiment, the cellular module 221 may include a Communication Processor (CP).

Each of the Wi-Fi module 222, the BT module 223, the GNSS module 224, the NFC module 225 and the MST module 226 may include, for example, a processor for processing data transmitted and received through the relevant module. According to some embodiments of the present disclosure, at least some (for example, two or more) of the cellular module 221, the Wi-Fi module 222, the BT module 223, the GNSS module 224, the NFC module 225, and the MST module 226 may be included in one Integrated Chip (IC) or IC package.

The RF module 227 may transmit/receive, for example, a communication signal (for example, an RF signal). The RF module 227 may include, for example, a transceiver, a Power Amplifier Module (PAM), a frequency filter, a Low Noise Amplifier (LNA), an antenna, and the like. According to another embodiment, at least one of the cellular module 221, the Wi-Fi module 222, the Bluetooth module 223, the GNSS module 224, the NFC module 225, and the MST module 226 may transmit and receive RF signals through a separate RF module.

The subscriber identification module 229 may include, for example, a card that includes a subscriber identity module and/or an embedded SIM, and may contain unique identification information (for example, an Integrated Circuit Card Identifier (ICCID)) or subscriber information (for example, an International Mobile Subscriber Identity (IMSI)).

The memory 230 (for example, the memory 130) may include, for example, an internal memory 232 or an external memory 234. The internal memory 232 may include, for example, at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disc drive, a Solid State Drive (SSD), and the like).

The external memory 234 may further include a flash drive, for example, a Compact Flash (CF), a Secure Digital (SD), a Micro-Secure Digital (Micro-SD), a Mini-Secure Digital (Mini-SD), an extreme Digital (xD), a Multi-Media Card (MMC), a memory stick, or the like. The external memory 234 may be functionally and/or physically connected to the electronic device 201 through various interfaces.

A security module 236 is a module including a storage space having a relatively high security level and may correspond to a circuit for guaranteeing safe data storage and a protected execution environment. The security module 236 may be implemented by a separate circuit and may include a separate processor. The security module 236 may exist in, for example, a detachable smart chip or Secure Digital (SD) card or include an embedded Secure Elements (eSE) embedded in a fixed chip of the electronic device 201. Further, the security module 236 may be operated by an Operating System (OS) different from the OS of the electronic device 201. For example, the security module 236may operate on the basis of a Java Card Open Platform (JCOP) operating system.

The sensor module 240 may, for example, measure a physical amount, detect an operation state of the electronic device 201, and convert measured or detected information into an electric signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a red, green, blue (RGB) sensor), a biometric sensor 2401, a temperature/humidity sensor 240J, an illumination sensor 240K, and a ultraviolet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an InfraRed (IR) sensor, an iris sensor, and/or a fingerprint sensor. The sensor module 240 may further include a control circuit for controlling one or more sensors therein. In some embodiments, the electronic device 201 may further include a processor configured to control the sensor module 240 as the part of or separately from the processor 210, and may control the sensor module 240 while the processor 210 is in a sleep state.

The input device 250 may include, for example, a touch panel 252, a (digital) pen sensor 254, a key 256, or an ultrasonic input device 258. The touch panel 252 may be, for example, at least one of a capacitive type, a resistive type, an infrared type, and an ultrasonic type. Further, the touch panel 252 may further include a control circuit. The touch panel 252 may further include a tactile layer and may provide a tactile reaction to a user.

The (digital) pen sensor 254 may include, for example, a recognition sheet that is a part of, or separate from, the touch panel. The key 256 may include, for example, a physical button, an optical key, or a keypad. The ultrasonic input device 258 may detect ultrasonic waves generated in the input device through a microphone (for example, the microphone 288) and identify data corresponding to the detected ultrasonic waves.

The display 260 (for example, the display 160) may include a panel 262, a hologram device 264, or a projector 266. The panel 262 may have a configuration that is the same as, or similar to, that of the display 160 illustrated in FIG. 1. The panel 262 may be implemented to be, for example, flexible, transparent, or wearable. The panel 262, together with the touch panel 252, may be implemented as one module. The hologram device 264 may show a three dimensional image in the air by using an interference of light. The projector 266 may display an image by projecting light onto a screen. The screen may be located, for example, inside or outside the electronic device 201. According to an embodiment, the display 260 may further include a control circuit for controlling the panel 262, the hologram device 264, or the projector 266.

The interface 270 may include, for example, a High-Definition Multimedia Interface (HDMI) 272, a Universal Serial Bus (USB) 274, an optical interface 276, or a D-subminiature (D-sub) 278. The interface 270 may be included in, for example, the communication interface 170 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bidirectionally convert, for example, a sound and an electrical signal. At least some elements of the audio module 280 may be included, for example, in the input/output interface 145 illustrated in FIG. 1. The audio module 280 may process sound information that is input or output through, for example, a speaker 282, a receiver 284, earphones 286, the microphone 288, and the like.

The camera module 291 is a device which may photograph a still image and a dynamic image. According to an embodiment, the camera module 291 may include one or more image sensors (for example, a front sensor or a back sensor), a lens, an Image Signal Processor (ISP), or a flash (for example, LED or xenon lamp).

The power management module 295 may manage, for example, the power of the electronic device 201. According to an embodiment, the power management module 295 may include a Power Management Integrated Circuit (PMIC), a charger Integrated Circuit (IC), or a battery 296 or fuel gauge. The PMIC may use a wired and/or wireless charging method. The wireless charging scheme may include, for example, a magnetic resonance scheme, a magnetic induction scheme, or an electromagnetic wave scheme, and may further include an additional circuit for wireless charging, for example, a coil loop, a resonant circuit, or a rectifier. The battery gauge may measure, for example, the residual amount of the battery 296 and a voltage, current, or temperature while charging. The battery 296 may include, for example, a rechargeable battery and/or a solar battery.

The indicator 297 may display a particular state, for example, a booting state, a message state, or a charging state of the electronic device 201 or the part thereof (for example, the processor 210). The motor 298 may convert an electrical signal into a mechanical vibration and may generate a vibration, a haptic effect, and the like. Although not illustrated, the electronic device 201 may include a processing device (for example, a GPU) for supporting a mobile TV. The processing unit for supporting the mobile TV may process media data according to a standard, such as Digital Multimedia Broadcasting (DMB), Digital Video Broadcasting (DVB), MediaFlo™, and the like.

Each of the above-described component elements of hardware according to the present disclosure may be configured with one or more components, and the names of the corresponding component elements may vary based on the type of electronic device. In various embodiments, the electronic device may include at least one of the above-described elements. Some of the above-described elements may be omitted from the electronic device, or the electronic device may further include additional elements. Also, some elements of the electronic device according to various embodiments may be combined into one entity, which may perform functions identical to those of the corresponding elements before the combination.

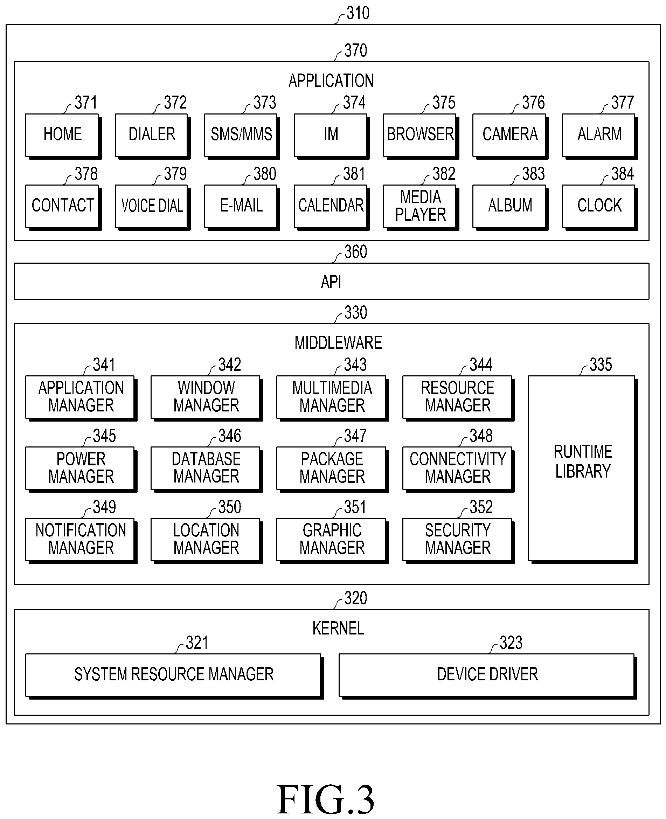

FIG. 3 is a block diagram of a program module according to various embodiments. According to an embodiment, the program module 310 (for example, the program 140) may include an Operating System (OS) for controlling resources related to the electronic device (for example, the electronic device 101) and/or various applications (for example, the applications 147) executed in the operating system. The operating system may be, for example, Android, iOS, Windows, Symbian, Tizen, Bada, or the like.

The program module 310 may include a kernel 320, middleware 330, an Application Programming Interface (API) 360, and/or applications 370. At least some of the program module 310 may be preloaded on the electronic device, or may be downloaded from an external electronic device (for example, the electronic device 102 or 104, or the server 106).

The kernel 320 (for example, the kernel 141) may include, for example, a system resource manager 321 and/or a device driver 323. The system resource manager 321 may control, allocate, or retrieve system resources. According to an embodiment, the system resource manager 321 may include a process management unit, a memory management unit, or a file system management unit. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 330 may provide, for example, a function required by the applications 370 in common, or may provide various functions to the applications 370 through the API 360 such that the applications 370 can efficiently use limited system resources within the electronic device. According to an embodiment, the middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module that a compiler uses in order to add a new function through a programming language while the applications 370 are being executed. The runtime library 335 may perform input/output management, memory management, the functionality for an arithmetic function, and the like.

The application manager 341 may manage, for example, a life cycle of at least one of the applications 370. The window manager 342 may manage Graphical User Interface (GUI) resources used on a screen. The multimedia manager 343 may determine formats required to reproduce various media files and may encode or decode a media file using a coder/decoder (codec) appropriate for the corresponding format. The resource manager 344 may manage resources, such as the source code, the memory, the storage space, and the like of at least one of the applications 370.

The power manager 345 may operate together with, for example, a Basic Input/Output System (BIOS) to manage a battery or power and provide power information required for the operation of the electronic device. The database manager 346 may generate, search for, and/or change a database to be used by at least one of the applications 370. The package manager 347 may manage the installation or update of an application that is distributed in the form of a package file.

The connectivity manager 348 may manage a wireless connection, such as Wi-Fi, Bluetooth, and the like. The notification manager 349 may display or notify of an event, such as an arrival message, an appointment, a proximity notification, and the like, in such a manner as not to disturb a user. The location manager 350 may manage the location information of the electronic device. The graphic manager 351 may manage a graphic effect to be provided to a user and a user interface relating to the graphic effect. The security manager 352 may provide various security functions required for system security, user authentication, and the like. According to an embodiment, in a case where the electronic device (for example, the electronic device 101) has a telephone call function, the middleware 330 may further include a telephony manager for managing a voice or video call function of the electronic device.

The middleware 330 may include a middleware module that forms a combination of various functions of the above-described elements. The middleware 330 may provide modules that are specialized according to the types of operating systems in order to provide differentiated functions. Furthermore, the middleware 330 may dynamically remove some of the existing elements, or may add new elements.

The API 360 (for example, the API 145) is a set of API programming functions and may be provided with a different configuration according to operating systems. For example, in the case of Android or iOS, one API set may be provided for each platform, and in the case of Tizen, two or more API sets may be provided for each platform.

The applications 370 (for example, the applications 147) may include, for example, one or more applications that are capable of providing functions such as a home application 371, a dialer application 372, an SMS/MMS application 373, an Instant Message (IM) application 374, a browser application 375, a camera application 376, an alarm application 377, a contact application 378, a voice dial application 379, an email application 380, a calendar application 381, a media player application 382, an album application 383, a clock application 384, a health care application (for example, measuring exercise quantity or blood sugar), an environment information (for example, atmospheric pressure, humidity, or temperature information) providing application, and the like.

According to an embodiment, the applications 370 may include an application (hereinafter, referred to as an "information exchange application" for convenience of description) that supports information exchange between the electronic device (for example, the electronic device 101) and an external electronic device (for example, the electronic device 102 or 104). The information exchange application may include, for example, a notification relay application for transferring specific information to an external electronic device or a device management application for managing an external electronic device.

For example, the notification relay application may include a function of transferring, to the external electronic device (for example, the electronic device 102 or 104), notification information that is generated from the other applications (for example, the SMS/MMS application, the e-mail application, the health care application, the environmental information application, and the like) of the electronic device. Furthermore, the notification relay application may, for example, receive notification information from the external electronic device and may provide the received notification information to a user.

The device management application may manage (for example, install, delete, or update), for example, at least one function of an external electronic device (for example, the electronic device 102 or 104) that communicates with the electronic device (for example, a function of turning on/off the external electronic device itself (or some components thereof) or a function of adjusting the brightness (or resolution) of a display), applications that operate in the external electronic device, or services (for example, a call service, a message service, and the like) that are provided by the external electronic device.

According to an embodiment, the applications 370 may include applications (for example, a health care application of a mobile medical appliance, and the like) designated according to the attributes of an external electronic device (for example, the electronic device 102 or 104). According to an embodiment, the applications 370 may include applications received from an external electronic device (for example, the server 106 or the electronic device 102 or 104). According to an embodiment, the applications 370 may include a preloaded application or a third party application that may be downloaded from a server. The names of the components of the program module 310 according to the illustrated embodiment may vary according to the type of operating system.

According to various embodiments, at least a part of the program module 310 may be implemented in software, firmware, hardware, or a combination of two or more thereof. At least some of the program module 310 may be implemented (for example, executed) by, for example, the processor (for example, the processor 210). At least some of the program module 310 may include, for example, a module, a program, a routine, a set of instructions, and/or a process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware electronic device may be configured to operate as one or more software modules in order to perform the operation of the present disclosure, and vice versa.

The program module according to the present disclosure may include one or more of the aforementioned components or may further include other additional components, or some of the aforementioned components may be omitted. Operations executed by a module, a program module, or other component elements according to various embodiments of the present disclosure may be executed sequentially, in parallel, repeatedly, or in a heuristic manner. Furthermore, some operations may be executed in a different order or may be omitted, or other operations may be added. Various embodiments disclosed herein are provided merely to easily describe technical details of the present disclosure and to help the understanding of the present disclosure, and are not intended to limit the scope of the present disclosure. Accordingly, the scope of the present disclosure should be construed as including all modifications or various other embodiments based on the technical idea of the present disclosure.

In this specification, termination of the application may refer to the operation of initializing state information maintained by the application or the operation of terminating (or forcibly terminating) a process of the application. The termination of the application may refer to the operation of returning resources secured by the application.

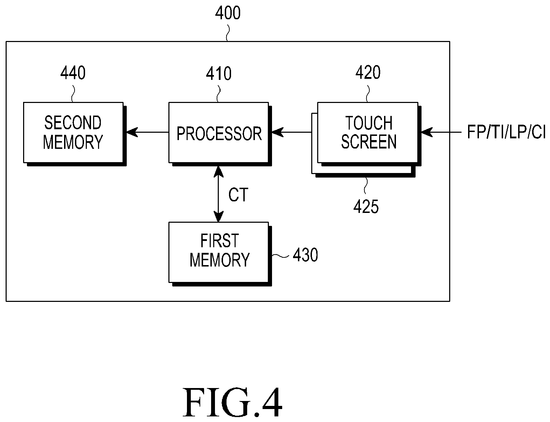

FIG. 4 is a block diagram schematically illustrating a user interface providing device according to various embodiments of the present disclosure.

Referring to FIG. 4, a user interface providing device 400 may include a processor 410, a touch screen 420, a pressure sensor 425, a first memory 430, and a second memory 440.

The user interface providing device 400 may provide a user with a User Interface (UI). According to an embodiment, the user interface providing device 400 may refer to a device or an apparatus which can provide a user interface through a display. For example, the user interface providing device 400 may be implemented to be substantially the same as or similar to the electronic devices 101 and 201 described in FIGs. 1 and 2.

The processor 410 may control the overall operation of the user interface providing device 400.

According to an embodiment, the processor 410 may control a user interface displayed on the touch screen 420 in response to a gesture input by the user through the touch screen 420.

The touch screen 420 may display the user interface according to a control of the processor 410. Further, the touch screen 420 may receive a gesture from the user.

According to an embodiment, the touch screen 420 may include a display and a touch panel. For example, the display may display a user interface, and the touch panel may receive a gesture from the user and transmit a signal for the received gesture to the processor 410.

According to an embodiment, the gesture may be touch input on the touch screen 420 by the user. For example, the gesture may include Force Press input (FP), Tap Input (TI), Long Press input (LP), swipe input, drag input, and/or drag & drop input (CI).

The pressure sensor 425 may detect pressure applied to the touch screen 420. According to an embodiment, the pressure sensor 425 may be implemented to contact or be connected to the touch screen 420. For example, the pressure sensor 425 may contact a lower part of the touch screen 420.

The first memory 430 may store data transmitted from the processor 410. According to an embodiment, the first memory 430 may store temporary storage data (CT) transmitted from the processor 410. For example, the first memory 430 may be implemented as volatile memory.

The second memory 440 may store data according to a control of the processor 410. According to an embodiment, the second memory 440 may store applications stored in the user interface providing device 400. For example, the applications may include a phone call application, a dictionary application, a calculator application, a schedule management application, and/or a contact management application. Meanwhile, the second memory 440 may be implemented as non-volatile memory.

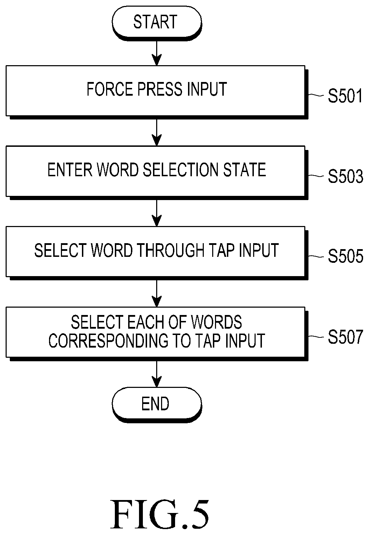

FIG. 5 is a flowchart illustrating a method of configuring a screen of the user interface providing device according to various embodiments of the present disclosure.

Referring to FIGs. 4 and 5, the user interface providing device 400 may receive a gesture from the user through the touch screen 420.

The processor 410 may receive force press input through the touch screen 420 in S501. At this time, the force press (or force touch) input may refer to input including preset pressure on the touch screen 420.

Hereinafter, the force press (or force touch) input is referred to as a first gesture for convenience of description. Further, the tap input may be referred to as a second gesture, and the drag input is referred to as a third gesture.

According to an embodiment, when pressure by the first gesture (FP) input to the touch screen 420 is smaller than or equal to a predetermined value, the processor 410 may perform a first function corresponding to the first gesture (FP).

For example, when the pressure by the first gesture (FP) is smaller than or equal to the predetermined value, the processor 410 may recognize the first gesture (FP) as long press input. At this time, the long press input may refer to input of maintaining a touch state for a preset time.

For example, the first function may refer to an operation of continuously selecting text displayed on the touch screen 420 through the long press input.

According to an embodiment, when the pressure by the first gesture (FP) input to the touch screen 420 is larger than the predetermined value, the processor 410 may enter a first state for selecting each of a plurality of words in the text displayed on the touch screen 420. At this time, the first state may refer to a state in which each of the plurality of words in the text displayed on the touch screen 420 is individually selected. For example, the first state may be a word selection state.

The processor 410 may perform a second function corresponding to the first gesture (FP) in the first state.

For example, the second function may refer to an operation of individually selecting text displayed on the touch screen 420 through the tap input. At this time, the operation of individually selecting the text displayed on the touch screen 420 may refer to an operation of selecting the text displayed on the touch screen 420 in the unit of words.

According to an embodiment, the processor 410 may select a first word by the first gesture (FP) in the text displayed on the touch screen 420. At this time, the user may identify entrance into the first state through the selection of the first word by the first gesture (FP). For example, the processor 410 may shade or underline the selected first word. Meanwhile, the first word may refer to a word selected by the force press input.

Further, the processor 410 may select a second word by the second gesture (TI) in the first state. For example, the second word may refer to a word selected by the tap input.

The processor 410 may individually select the second word in the text through the second gesture (TI) in S505. For example, the processor 410 may select the second word corresponding to the tap input and shade or underline the selected second word.

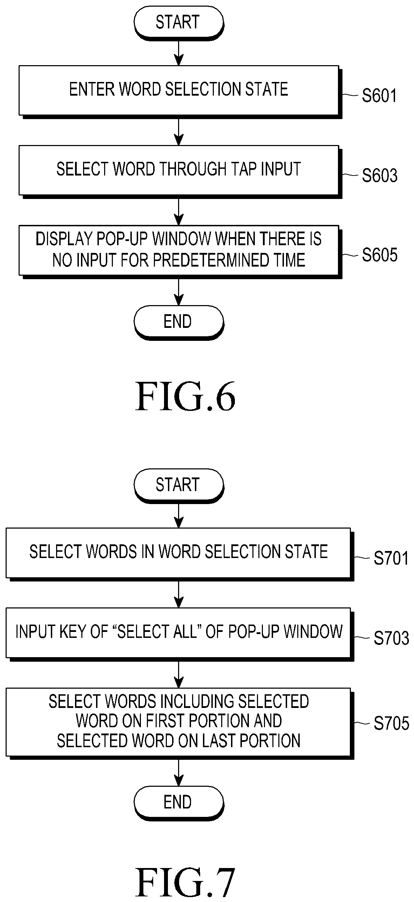

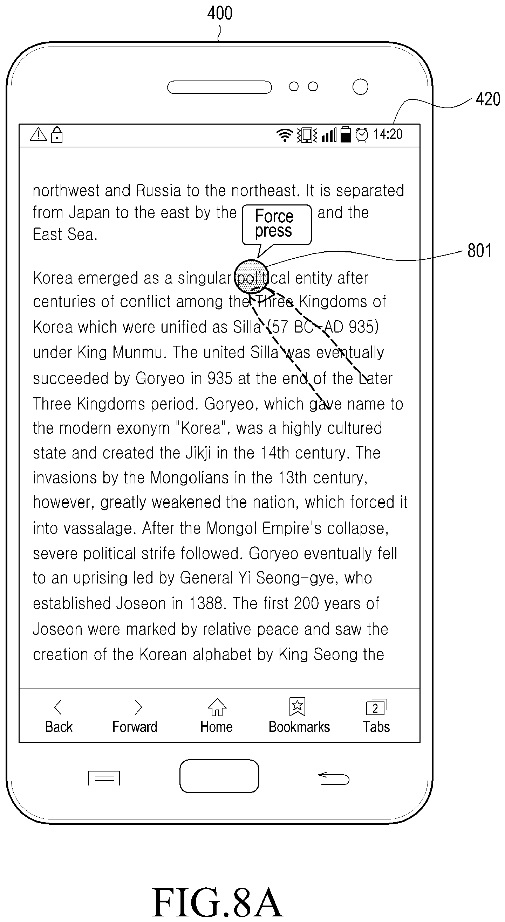

FIG. 6 is a flowchart illustrating a method of configuring a screen of the user interface providing device according to various embodiments of the present disclosure. The embodiment of FIG. 6 will be described in more detail with reference to FIGs. 8A to 8C. FIGs. 8A to 8C are block diagrams illustrating a method of configuring the screen of the user interface providing device according to various embodiments of the present disclosure.

Referring to FIGs. 4 to 6 and FIGs. 8A to 8C, the processor 410 may enter the first state (or the word selection state) in response to the first gesture (FP). Further, the processor 410 may select the first word in response to the first gesture (FP).

According to an embodiment, as illustrated in FIG. 8A, the processor 410 may receive a first gesture 801 for "political" 811displayed on the touch screen 420. The processor 410 may select "political" 811 and shade the same.

The processor 410 may select the second word in response to the tap input. The processor 410 may select the second word corresponding to the tap input and display the selected second word through the touch screen 420. At this time, the selected second word may be displayed through the shade or underline.

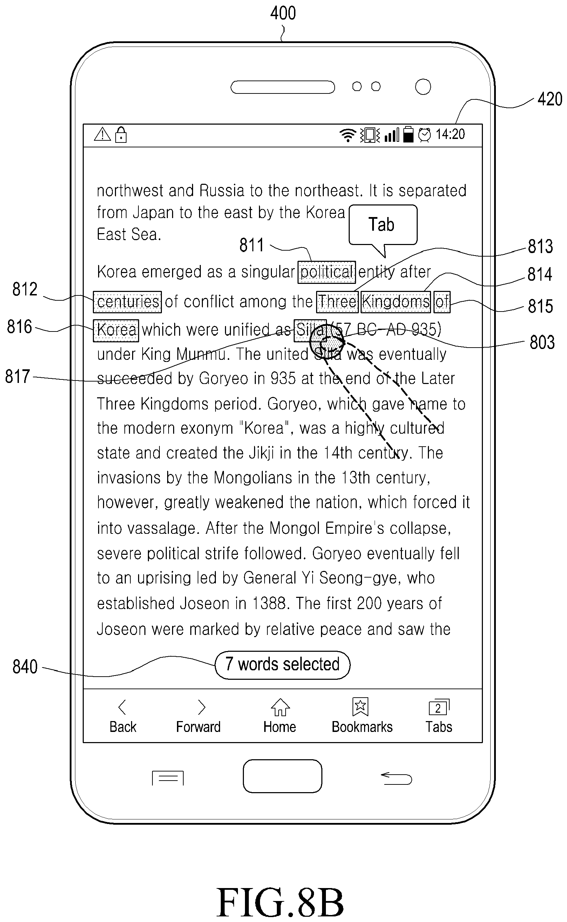

According to an embodiment, as illustrated in FIG. 8B, the processor 410 may receive a second gesture 803 for "centuries" 812, "Three" 813, "Kingdoms" 814, "of' 815, "Korea" 816, and "Silla" 817 displayed on the touch screen 420. The processor 410 may select "centuries" 812, "Three" 813, "Kingdoms" 814, "of 815", "Korea" 816, and "Silla" 817 in response to the tap input 803. Further, the processor 410 may shade the selected words "centuries" 812, "Three" 813, "Kingdoms" 814, "of 815", "Korea" 816, and "Silla" 817.

Further, the processor 410 may display information 840 on the number of selected words on the touch screen 420. For example, the processor 410 may display a window 840 indicating selection of seven words on the touch screen 420.

When there is no input for a predetermined time after the tap input, the processor 410 may generate a pop-up window and display the pop-up window 851 on the touch screen in S605.

The pop-up window may include keys (or icons) corresponding to functions for the first word and the second word selected by the processor 410.

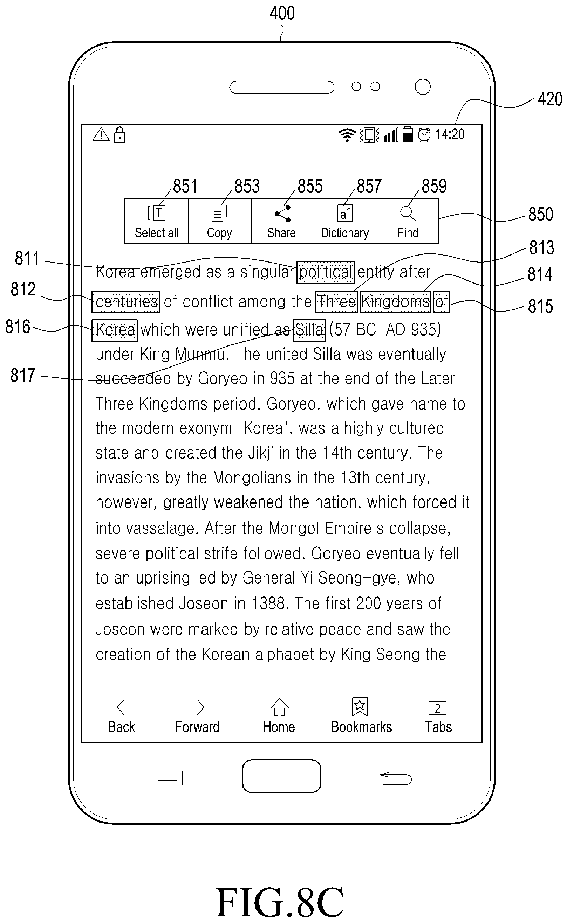

For example, as illustrated in FIG. 8C, the pop-up window 850 may include keys corresponding to "select all" 851, "copy" 853, "share" 855, "dictionary" 857, and/or "find" 859. Further, the pop-up window 850 may further include keys corresponding to "paste", "cut", "web search", "phone", "calculate", "register contact number", and/or "register schedule".

According to an embodiment, the processor 410 may receive input for the pop-up window 850 from the user. For example, the processor 410 may receive the second gesture (TI) for the pop-up window 850.

Further, the processor 410 may perform a function corresponding to the input for the pop-up window 850 in response to the input for the pop-up window 850. For example, the processor 410 may perform additional functions for the selected first word and second word in response to the input for the pop-up window 850. At this time, the additional functions may be functions of "select all" 851, "copy" 853, "paste", "cut", "calculate", "register schedule", "register (or add) contact number", "share" 855, "dictionary" 857, and/or "find" 859 for the first word and the second word.

For example, the processor 410 may receive input for the key of "copy" 853 of the pop-up window 850. For example, the user may select the key of "copy" 853 of the pop-up window 850 through the second gesture (TI). At this time, the processor 410 may copy the selected first word and second word and paste them in the first memory 430. For example, the processor 410 may copy the selected first word and second word and paste them in a clipboard.

Further, when the selected first word and second word include numbers, the processor 410 may perform at least one of a calculation (or calculator) function, a schedule registering function, a contact number registering (or adding) function, and a phone call function for the numbers.

For example, the processor 410 may determine whether the selected first word and second word include numbers. When the selected first word and second word include numbers, the processor 410 may perform the calculator function for the numbers.

For example, the processor 410 may perform the addition (or preset four fundamental arithmetic operations) for numbers included in the selected first word and second word. At this time, the processor 410 may perform the addition (or preset four fundamental arithmetic operations) for the numbers through a calculator application stored in the second memory 440.

Further, the processor 410 may determine whether the selected first word and second word include numbers and, when the selected first word and second word include numbers, perform a phone call function for the numbers. At this time, the processor 410 may make a phone call to the numbers through a phone call application stored in the second memory 440.

FIG. 7 is a flowchart illustrating a method of configuring a screen of the user interface providing device according to various embodiments of the present disclosure. The embodiment of FIG. 7 is described in more detail with reference to FIGs. 8A to 8F. FIGs. 8A to 8F are block diagrams illustrating a method of configuring the screen of the user interface providing device according to various embodiments of the present disclosure.

Referring to FIGs. 4 to 7, the processor 410 may enter the first state (or the word selection state) in response to the first gesture (FP).

The processor 410 may select the first word in response to the first gesture (FP) and select the second word in response to the second gesture (TI) in the first state in S701.

As illustrated in FIG. 8C, the processor 410 may generate a pop-up window 850 and display the pop-up window 850 on the touch screen 420. At this time, the processor 410 may receive input for function keys 851, 853, 855, 857, and 859 included in the pop-up window 850 from the user.

The processor 410 may receive input 805 for the key of "select all" 851 of the pop-up window in S703. For example, the user may select the key of "select all" 851 of the pop-up window 850 through the tap input (TI).

According to an embodiment, the processor 410 may select words including a selected word on the first portion to a selected word on the last portion in the selected first word and second word in response to the input 805 for the key of "select all" 851. That is, the processor 410 may select words located between the first word to the last word.

For example, the processor 410 may configure a word, which is located on the top left portion, as the selected word on the first portion, in the selected first word and second word. Further, the processor 410 may configure a word, which is located on the bottom right portion, as the selected word on the last portion, in the selected first word and second word.

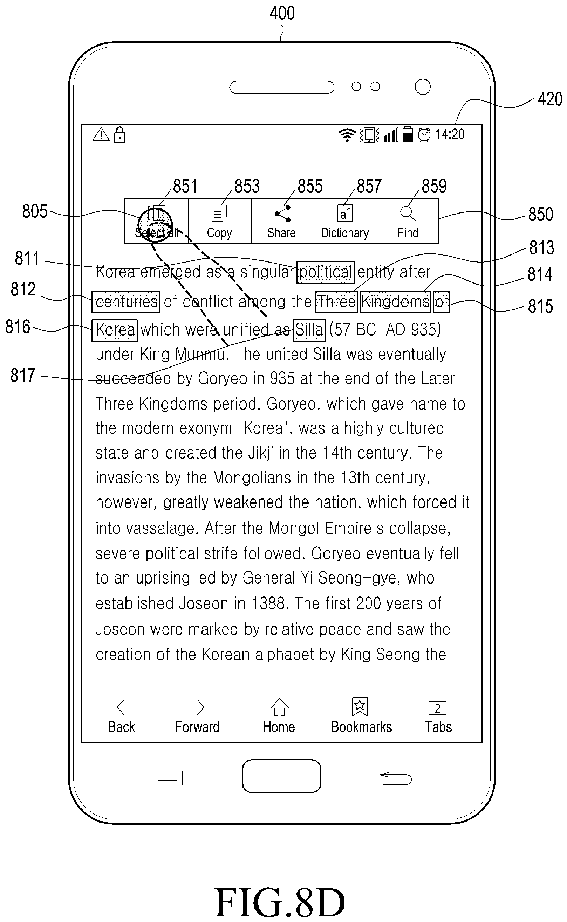

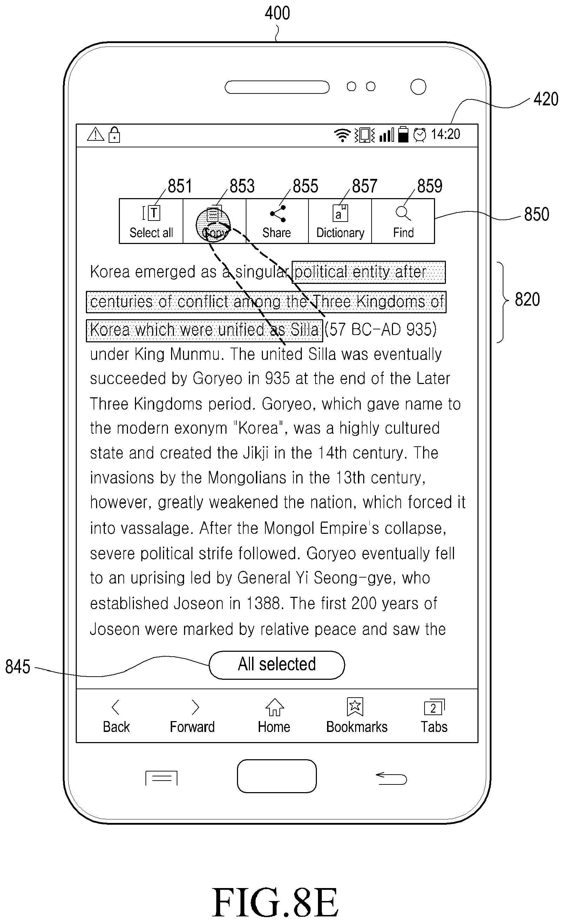

According to an embodiment, as illustrated in FIGs. 8D and 8E, the processor 410 may select words 820 from "political" 811 to "Silla" displayed on the touch screen 420 and shade the selected words 820.

Further, the processor 410 may display information 840 on the number of selected words on the touch screen 420. For example, the processor 410 may display "all selected" 845 on the touch screen 420 in response to "select all" 851.

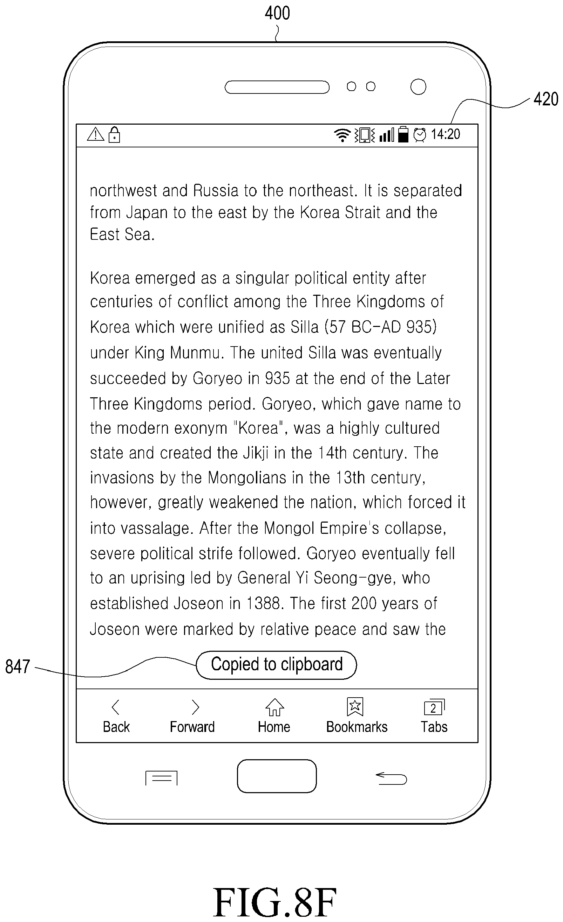

As illustrated in FIGs. 8E and 8F, the processor 410 may receive input for the key of "copy" 853 of the pop-up window. For example, the user may select the key of "copy" 851 of the pop-up window 850 through the tap input (TI). At this time, the processor 410 may copy the words 820 through "select all" and paste the same in the first memory 430. For example, the processor 410 may copy the words through "select all" and paste the same in the clipboard.

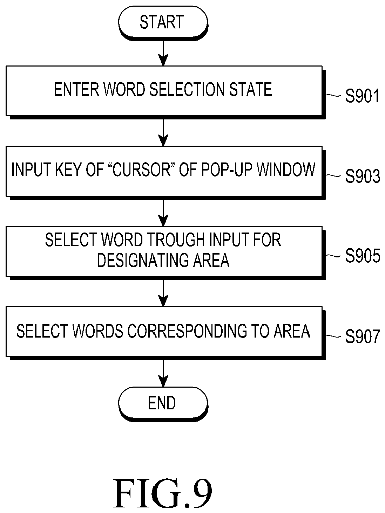

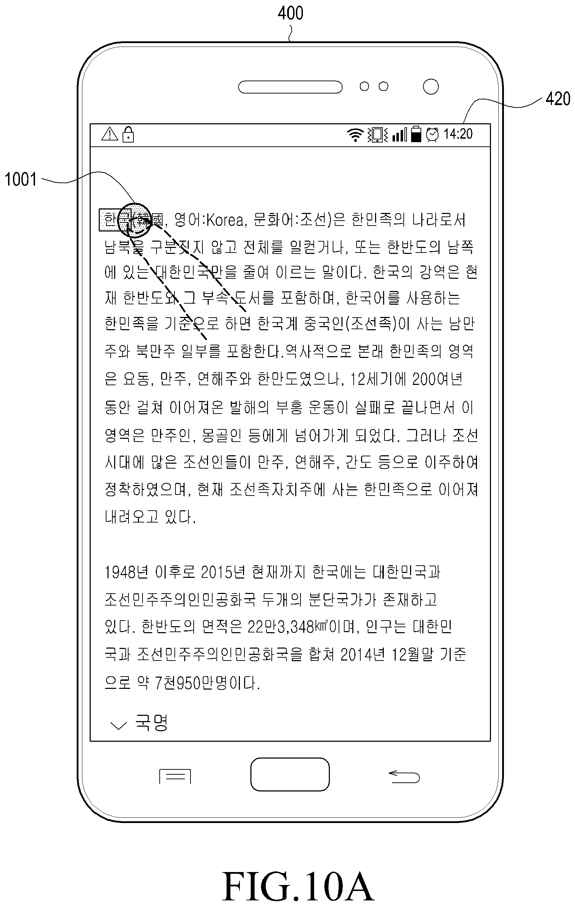

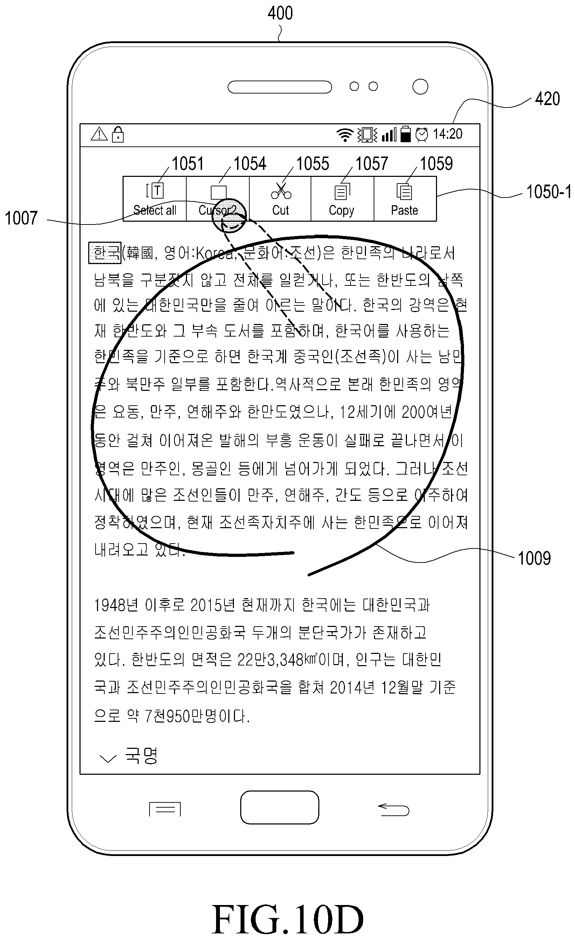

FIG. 9 is a flowchart illustrating a method of configuring a screen of the user interface providing device according to various embodiments of the present disclosure. The embodiment of FIG. 9 is described in more detail with reference to FIGs. 10A to 10E. FIGs. 10A to 10E are block diagrams illustrating the method of configuring the screen of the user interface providing device according to various embodiments of the present disclosure.

Referring to FIG. 9 and FIGs. 10A to 10E, the processor 410 may enter the first state (or the word selection state) in response to a first gesture 1001 in S901.

The processor 410 may generate a pop-up window 1050 and display the pop-up window 1050 on the touch screen 420. At this time, the processor 410 may receive input for function keys 1051, 1053, 1055, 1057, and 1059 included in the pop-up window 1050 from the user.

The processor 410 may receive input 1003 or 1007 for a key of "cursor" 1053 of the pop-up window in S903. For example, the user may select the key of "cursor" 1053 or 1054 of the pop-up window 1050 through the tap input (TI).

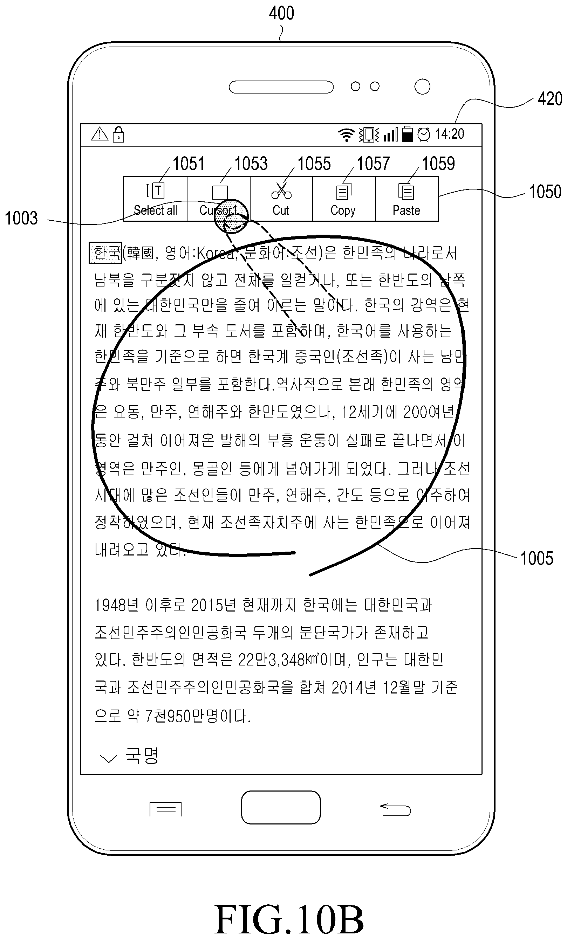

According to an embodiment, as illustrated in FIG. 10B, the processor 410 may receive drag & drop input 1005 or 1009 for text displayed on the touch screen 420. For example, the user may select words included in the text though the drag & drop input 1005 or 1009.

The processor 410 may receive the drag & drop input 1005 or 1009 for designating an area for the text displayed on the touch screen 420 in S905.

The processor 410 may select words 1020 or 1025 corresponding to the generated area through the drag & drop input 1005 or 1007 in S907.

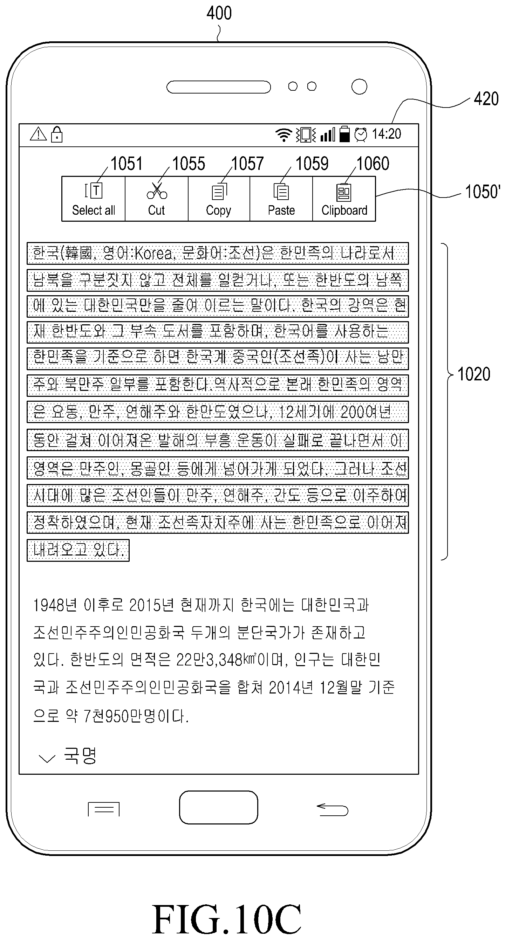

According to an embodiment, as illustrated in FIG. 10C, the processor 410 may determine a rectangular area corresponding to an inner area of the area generated through the drag & drop input 1005 and select words 1020 included in the rectangular area. At this time, the rectangular area may refer to an area (or a rectangular area) having four sides such as the top part, the bottom part, the left part, and the right part of the area generated through the drag & drop input 1005.

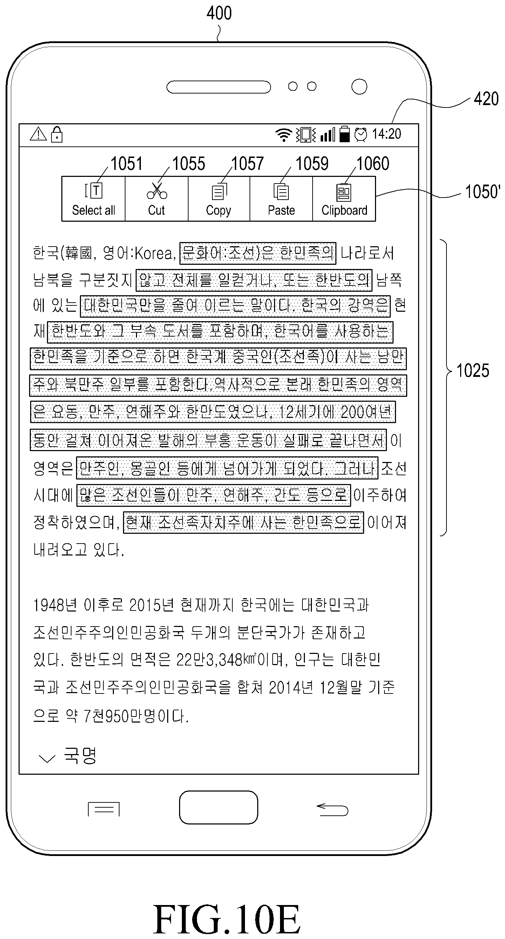

According to another embodiment, as illustrated in FIG. 10E, the processor 410 may select only words 1025 included in the inner area of the area generated through the drag & drop input 1005. At this time, the words 1025 included in the inner area may include words included in the area or over the area.

The processor 410 may perform an additional function (for example, copy) for the selected words based on input for the pop-up window 1050. For example, the processor 410 may perform a copy function of the selected words in response to the tap input for the key of "copy" 1057 of the pop-up window 1050'. Further, the processor 410 may perform a paste function for the copied words in response to the tap input for the key of "paste" 1059 of the pop-up window 1050'.

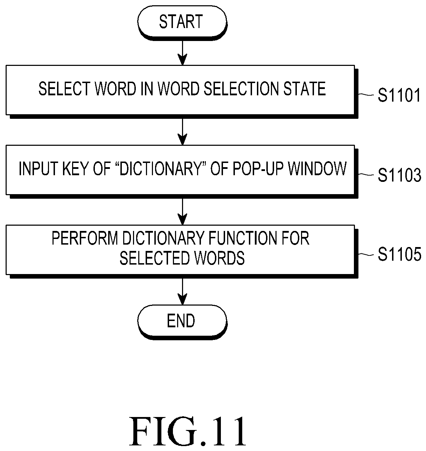

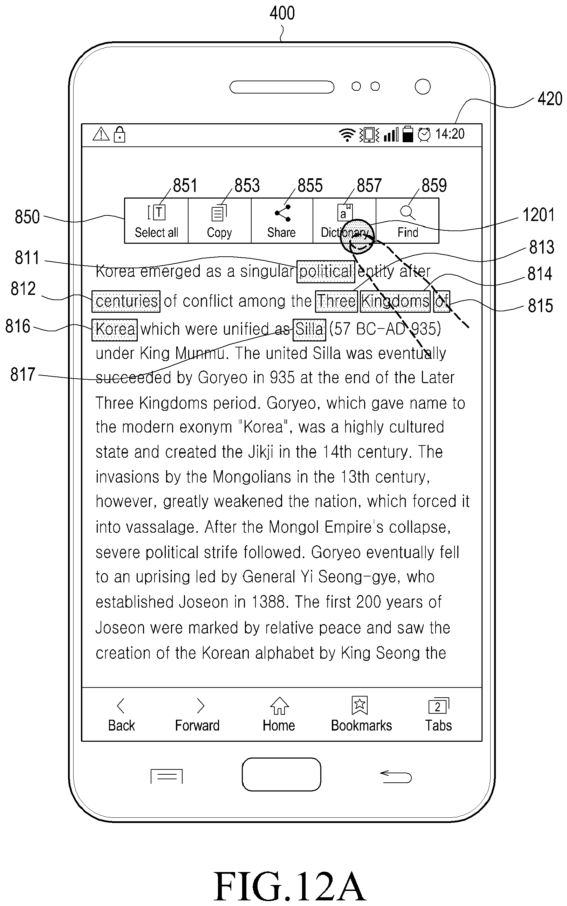

FIG. 11 is a flowchart illustrating a method of configuring a screen of the user interface providing device according to various embodiments of the present disclosure. The embodiment of FIG. 11 is described in more detail with reference to FIGs. 12A to 12E. FIGs. 12A to 12E are block diagrams illustrating the method of configuring the screen of the user interface providing device according to various embodiments of the present disclosure.

Referring to FIG. 11 and FIGs. 12A to 12E, the processor 410 may enter the first state (or the word selection state) in response to the first gesture (FP).

The processor 410 may select the first word in response to the first gesture (FP) and select the second word in response to the second gesture (TI) in the first state.

As illustrated in FIG. 12A, the processor 410 may generate the pop-up window 850 and display the pop-up window 850 on the touch screen 420. At this time, the processor 410 may receive input for function keys 851, 853, 855, 857, and 859 included in the pop-up window 850 from the user.

The processor 410 may receive input 1201 for the key of "dictionary" 857 of the pop-up window in S1103. For example, the user may select the key of "dictionary" 857" of the pop-up window 850 through the tap input (TI).

The processor 410 may perform a dictionary function for the selected first word and second word in S1105.

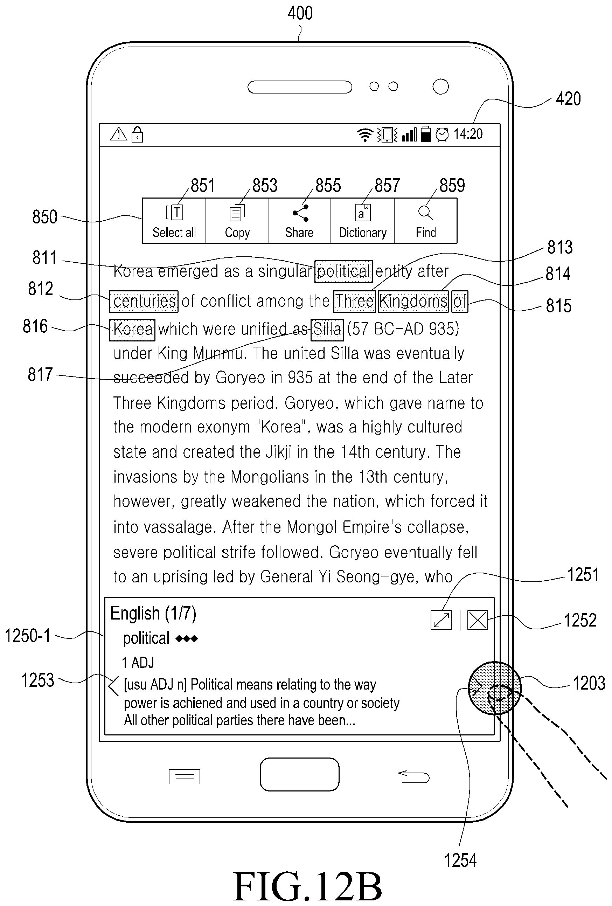

According to an embodiment, as illustrated in FIGs. 12A and 12B, the processor 410 may perform the dictionary function for the selected words "political", "centuries" 812, "Three" 813, "Kingdoms" 814, "of' 815, "Korea" 816, and "Silla" 817.

The processor 410 may display a dictionary window for the selected words on a lower part of the touch screen 420.

For example, the processor 410 may display a dictionary window 1250-1 for "political" 811 on the touch screen 420. At this time, the dictionary window 1250-1 may include dictionary information on "political" 811. Further, the dictionary window 1250-1 may receive information on "political" 811 from a dictionary application included in the second memory 440 and display dictionary information on "political" 811 on the dictionary window 1250-1.

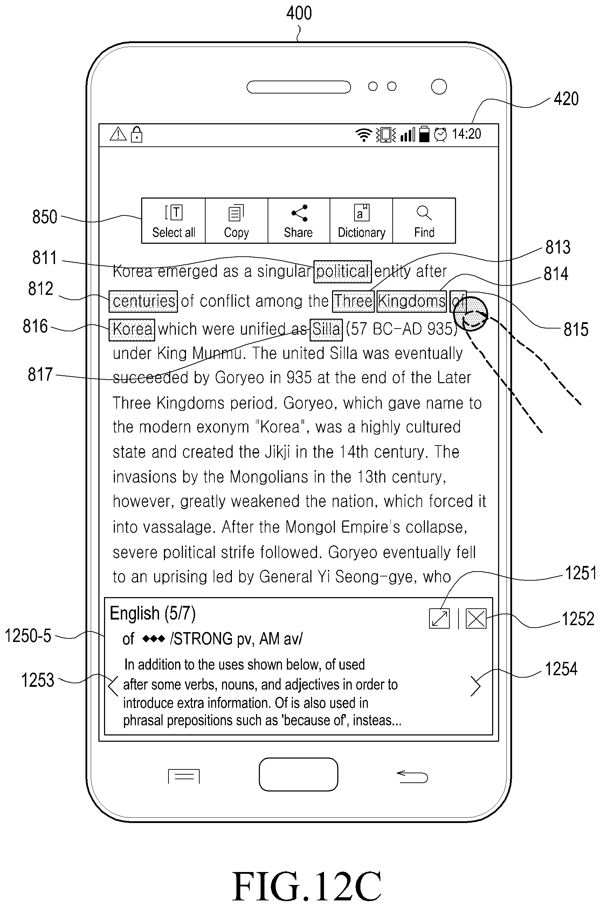

Further, as illustrated in FIG. 12C, the processor 410 may sequentially display the selected words 811 to 817 on the dictionary windows 1260-1 to 1260-7 in response to the left and right swipe or the second gesture 1205 for movement keys 1253 and 1254. For example, the processor 410 may display the dictionary window on the word (for example, "centuries" 812) sequent to "political" 811 in response to the left and right swipe or the input 1205 for the movement key 1254.

Meanwhile, when the selected word is selected again through the second gesture (TI) while the dictionary function is performed, the processor 410 may display the dictionary window for the corresponding word. For example, as illustrated in FIG. 12C, the processor 410 may display the dictionary window 1260-5 for "of' on the touch screen 420 in response to the second gesture (TI) for "of'.

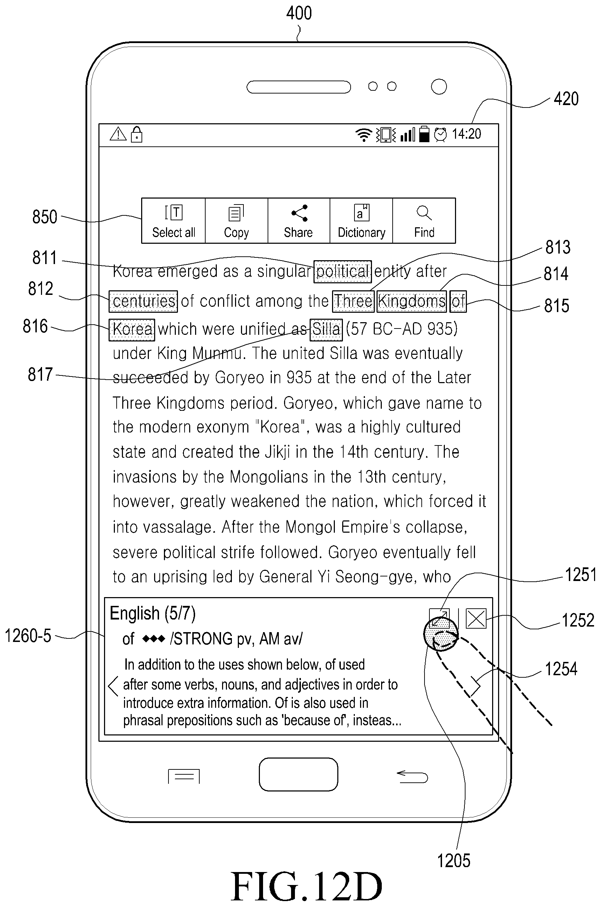

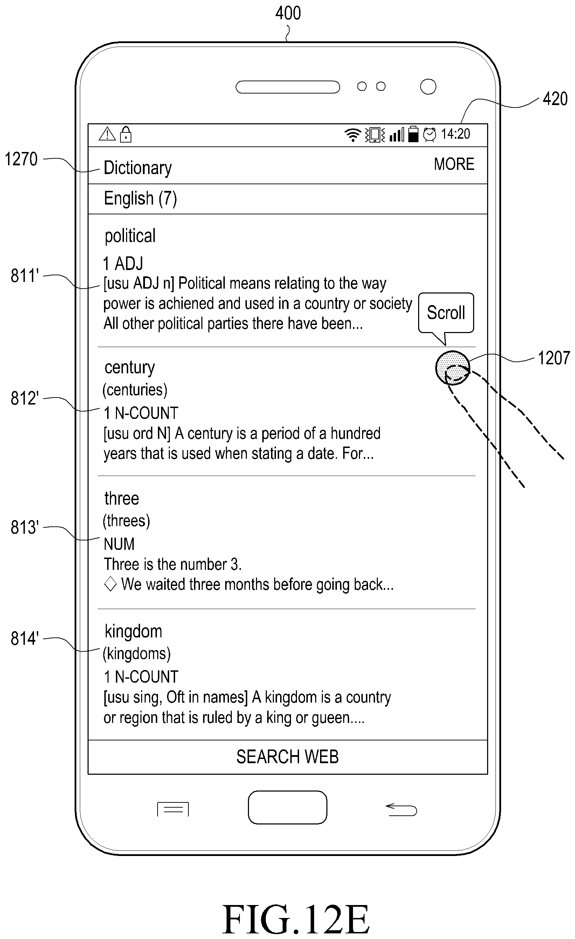

According to another embodiment, as illustrated in FIGs. 12D and 12E, the processor 410 may display an entire dictionary window 1270 on the touch screen 420 in response to input for an entire screen key 1251. For example, the processor 410 may receive the second gesture (TI) for the entire screen key 1251 from the user and display the entire dictionary window 1270. The entire dictionary window 1270 may include dictionary information 811' to 817' for the words 811 to 817 selected by the user. At this time, the user may identify dictionary information 811' to 817' on the selected words 811 to 817 by scrolling the entire dictionary window 1270 as indicated by reference numeral 1207.

Further, the processor 410 may terminate the dictionary function in response to input for an end key 1252. For example, the processor 410 may receive the second gesture (TI) for the end key 1252 from the user and terminate the dictionary function.

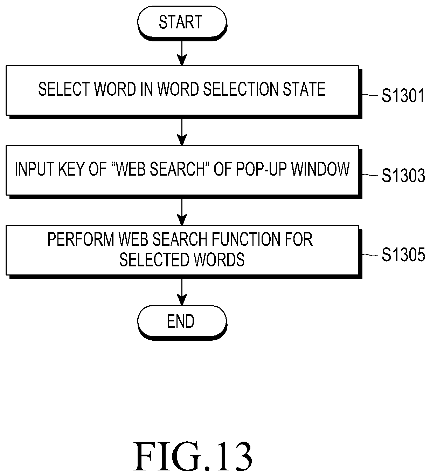

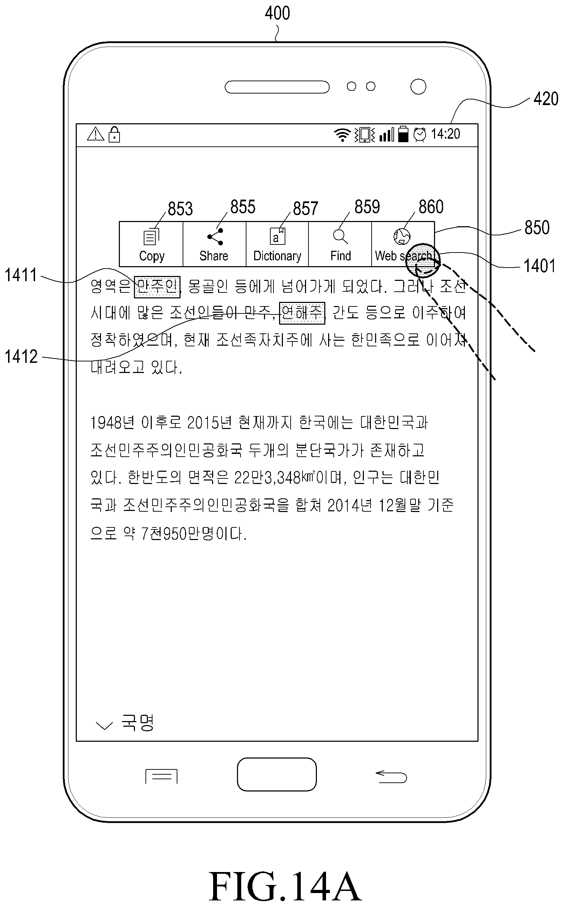

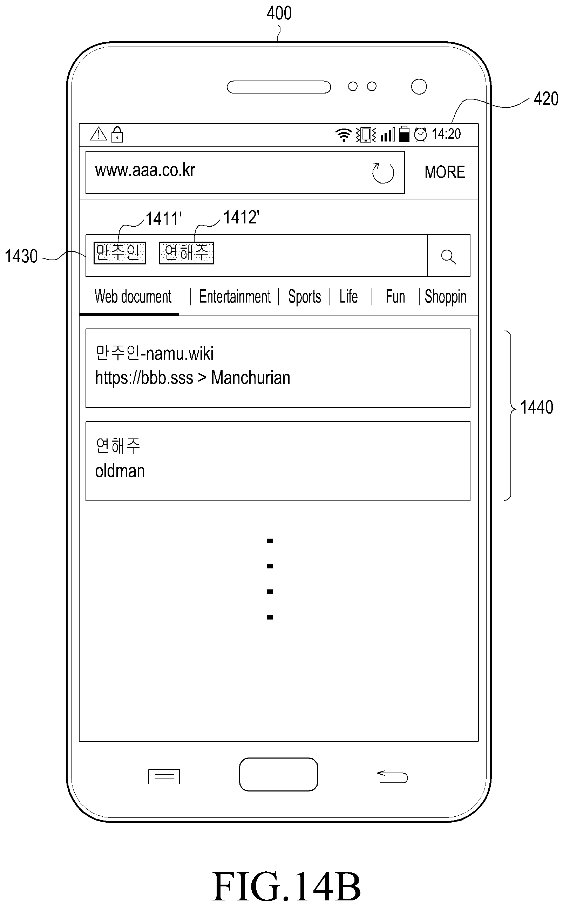

FIG. 13 is a flowchart illustrating a method of configuring a screen of the user interface providing device according to various embodiments of the present disclosure. The embodiment of FIG. 13 is described in more detail with reference to FIGs. 14A and 14B. FIGs. 14A and 14B are block diagrams illustrating the method of configuring the screen of the user interface providing device according to various embodiments of the present disclosure.

The processor 410 may select the first word in response to the first gesture (FP) and select the second word in response to the second gesture (TI) in the first state in S1301.

The processor 410 may generate a pop-up window and display the pop-up window 850 on the touch screen 420. At this time, the processor 410 may receive input for function keys 853, 855, 857, 859, and 860 included in the pop-up window 850 from the user.

The processor 410 may receive input 1401 for a key of "web search" 860 of the pop-up window 850 in S1303. For example, the user may select the key of "web search" 860 of the pop-up window 850 through the tap input (TI).

The processor 410 may perform a web search function for the selected first word and second word in response to the input 1401 for the pop-up window in S1305.

According to an embodiment, as illustrate in FIGs. 14A and 14B, the processor 410 may perform the web search function for the selected word. For example, the processor 410 may execute a preset web search application and perform the web search function for the selected words " 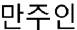 " 1411 and " 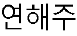 " 1412 through the web search application. At this time, the web search application may be an application stored in the second memory 440. Further, the web search application may be an application of accessing a predetermined web search site and performing a search function.

For example, as illustrated in FIG. 14B, the processor 410 may input the selected words " 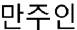 " 1411' and " 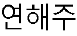 " 1412' to a search window 1430 of the web search application. Further, the processor 410 may display a web search result 1440 of the selected words " 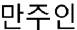 " 1411' and " 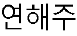 " 1412' on the touch screen 420.

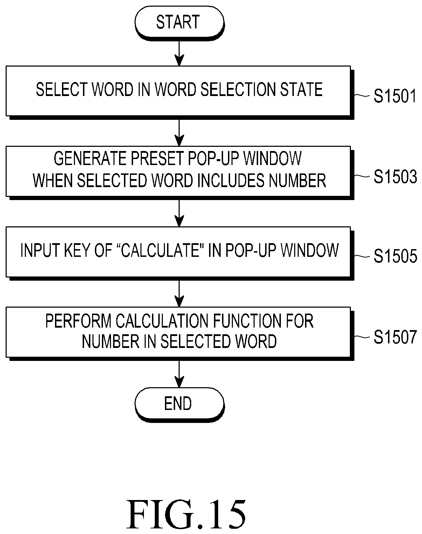

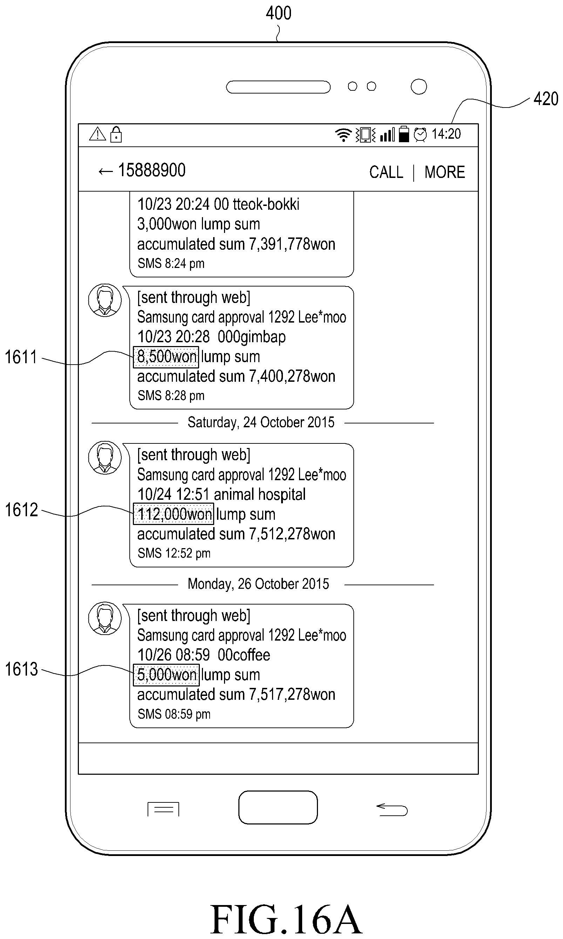

FIG. 15 is a flowchart illustrating a method of configuring a screen of the user interface providing device according to various embodiments of the present disclosure. The embodiment of FIG. 15 will be described in more detail with reference to FIGs. 16A to 16C. FIGs. 16A to 16C are block diagrams illustrating a method of configuring the screen of the user interface providing device according to various embodiments of the present disclosure.

The processor 410 may select the first word in response to the first gesture (FP) and select the second word in response to the second gesture (TI) in the first state in S1501.

The processor 410 may identify whether the selected first word and second word include numbers. When the selected first word and second word include numbers, the processor 410 may generate a pop-up window 1650 including a preset key (or menu) in S1503. For example, the preset key may refer to a key 1659 for performing a calculation function.

The processor 410 may display the pop-up window 1650 on the touch screen 420. At this time, the processor 410 may receive input for function keys 1651, 1653, 1655, 1657, and 1659 included in the pop-up window 1650 from the user.

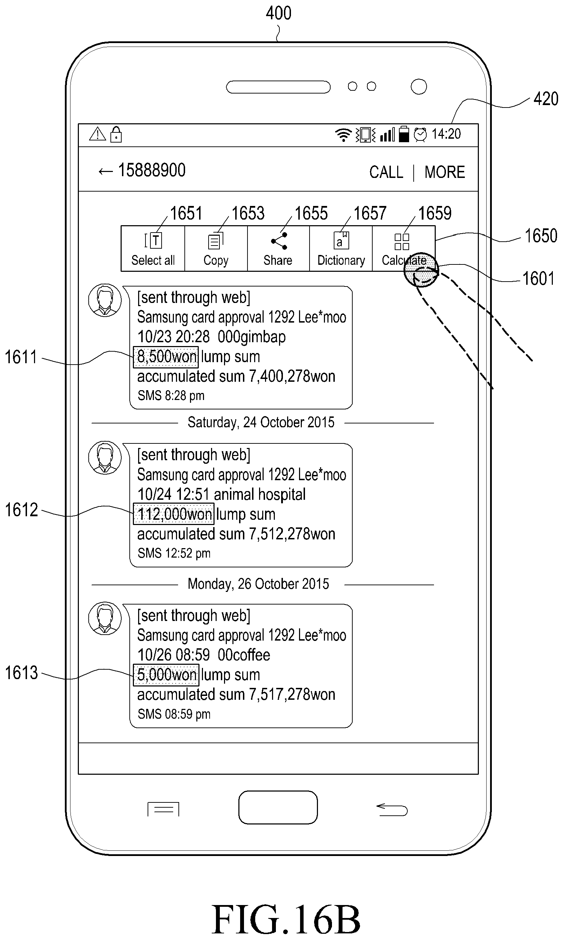

As illustrated in FIG. 16B, the processor 410 may receive input 1601 for the key of "calculate" 1659 of the pop-up window 1650 in S1505. For example, the user may select the key of "calculate" 1659 of the pop-up window 1650 through the tap input (TI).

The processor 410 may perform the calculation function for the selected first word and second word in response to the input 1601 for the pop-up window 1650 in S1607.

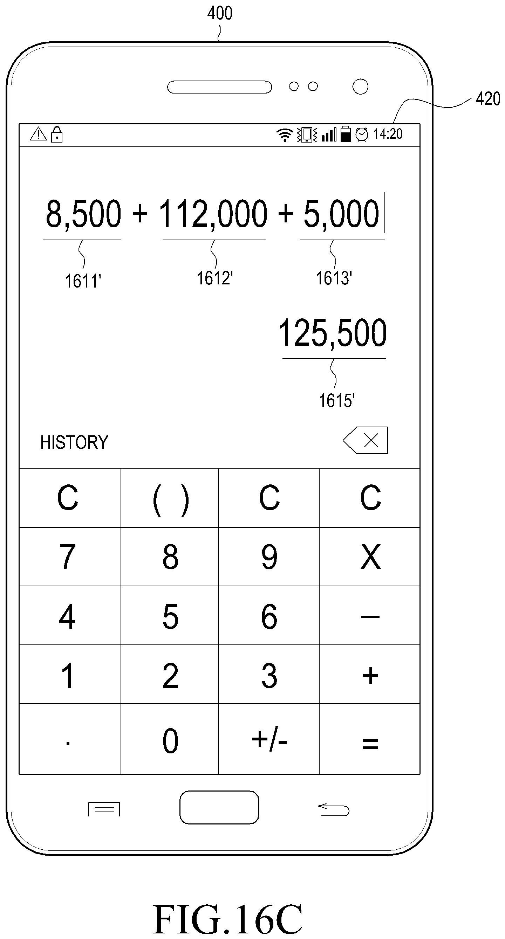

According to an embodiment, as illustrated in FIG. 16C, the processor 410 may perform calculation for numbers in the selected word. For example, the processor 410 may execute a preset calculation application and perform the calculation function for the numbers "8500" 1611', "112000" 1612', and "5000" 1613' in the selected words through the calculation application. At this time, the calculation application may be an application stored in the second memory 440.

For example, as illustrated in FIG. 16C, the processor 410 may input "8500" 1611', "112000" 1612', and "5000" 1613', which numbers in the selected words, to the input window of the calculation window as indicated by reference numerals 1611', 1612', and 1613'. Further, the processor 410 may display an addition result 1615' of "8500" 1611', "112000" 1612', and "5000" 1613', which is the numbers in the selected words, on the touch screen 420. At this time, although FIG. 16C illustrates the calculation of the addition for convenience of description, the technical idea of the present disclosure is not limited thereto and another calculation method may be applied by user settings or the processor 410.

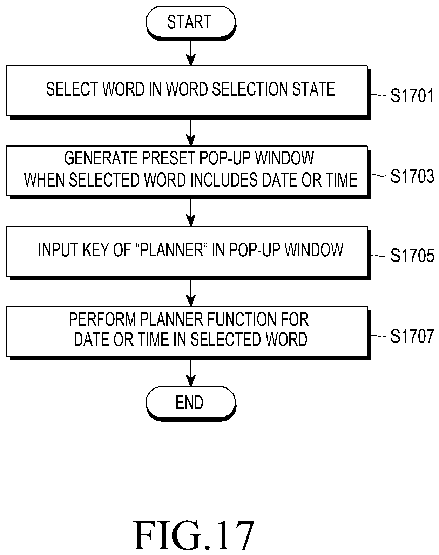

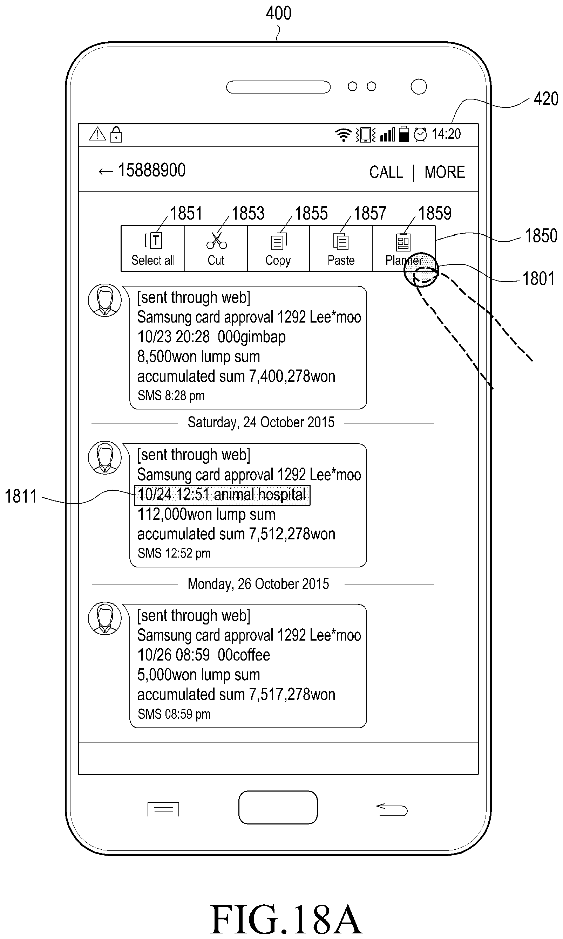

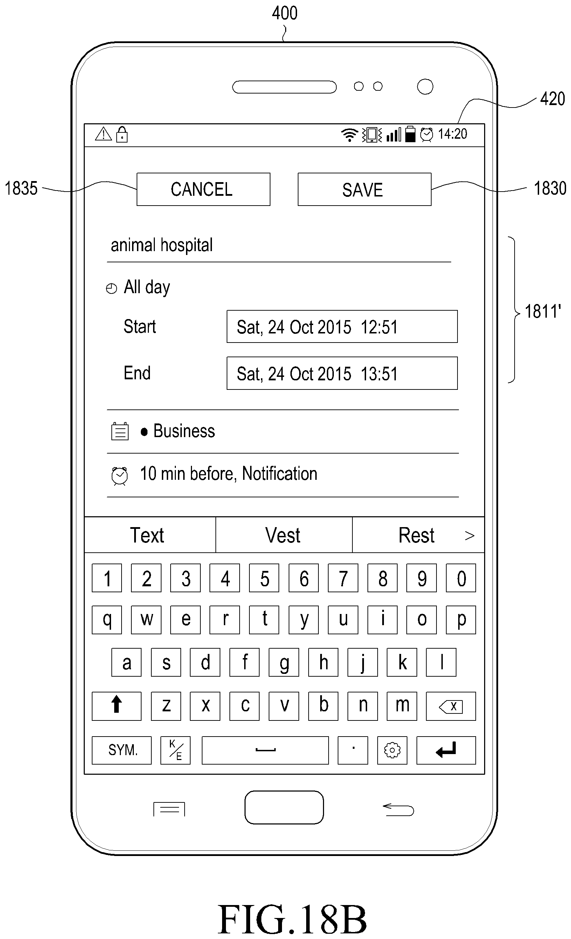

FIG. 17 is a flowchart illustrating a method of configuring a screen of the user interface providing device according to various embodiments of the present disclosure. The embodiment of FIG. 17 is described in more detail with reference to FIGs. 18A and 18B. FIGs. 18A and 18B are block diagrams illustrating the method of configuring the screen of the user interface providing device according to various embodiments of the present disclosure.

The processor 410 may select the first word in response to the first gesture (FP) and select the second word in response to the second gesture (TI) in the first state in S1701.

The processor 410 may identify whether the selected first word and second word include a date or a time. When the selected first word and second word include a date or a time, the processor 410 may generate a pop-up window 1850 including a preset key in S1703. For example, the preset key may refer to a key for performing schedule management (or planner).

The processor 410 may display the pop-up window 1850 on the touch screen 420. At this time, the processor 410 may receive input for function keys 1851, 1853, 1855, 1857, and 1859 included in the pop-up window 1850 from the user.

As illustrated in FIG. 18A, the processor 410 may receive input 1801 for a key of planner 1859 of the pop-up window 1850 in S1705. For example, the user may receive the key of planner 1859 of the pop-up window 1850 through the tap input (TI).

The processor 410 may perform the schedule management function for the selected first word and second word in response to the input 1801 for the pop-up window 1850 in S1707.

According to an embodiment, as illustrated in FIG. 18B, the processor 410 may perform the schedule management function for a date or a time in the selected words. For example, the processor 410 may execute a preset schedule management application and perform the schedule management function for the data or time "10/24 12:51 animal hospital" 1811 in the selected words through the schedule management application. At this time, the schedule management application may be an application stored in the second memory 440.

For example, the processor 410 may input the date or time "10/24 12:51 animal hospital" 1811' in the selected words to the input window as indicated by reference numeral 1611'.

Meanwhile, the processor 410 may select "save" or "cancel" for the input word "10/24 12:51 animal hospital" 1811'. For example, the user may register "10/24 12:51∼13:51 animal hospital" 1811' by the second gesture (TI) for a key for "save" 1830. The user may add or change the input date or time and register the schedule. Further, the user may cancel the registration for "10/24 12:51∼13:51 animal hospital" 1811' by the second gesture (TI) for a key of "cancel" 1835.

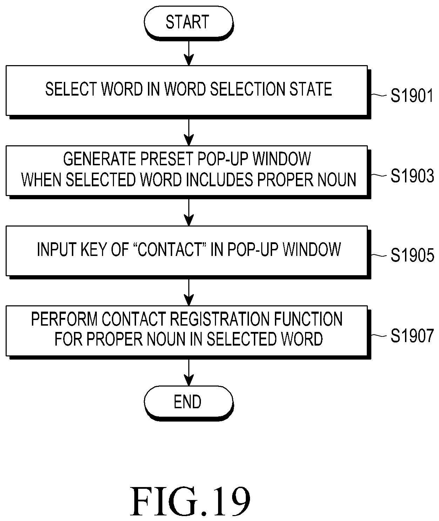

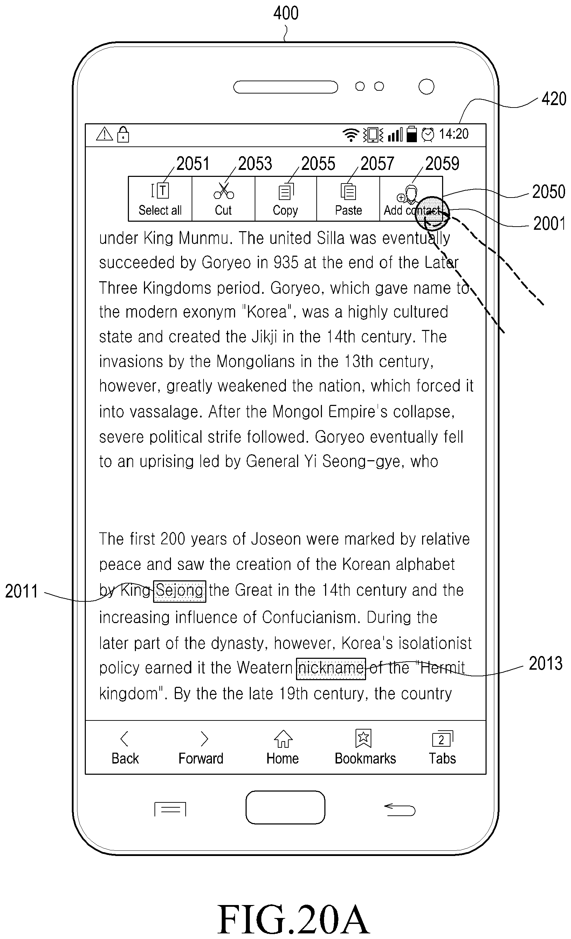

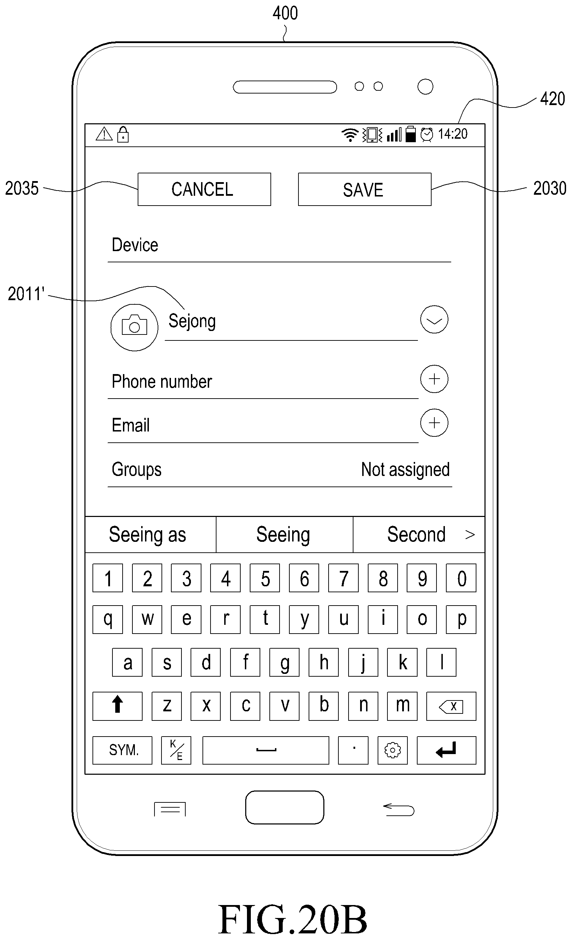

FIG. 19 is a flowchart illustrating a method of configuring a screen of the user interface providing device according to various embodiments of the present disclosure. The embodiment of FIG. 19 is described in more detail with reference to FIGs. 20A and 20B. FIGs. 20A and 20B are block diagrams illustrating the method of configuring the screen of the user interface providing device according to various embodiments of the present disclosure.

The processor 410 may select the first word in response to the first gesture (FP) and select the second word in response to the second gesture (TI) in the first state in S1901.

The processor 410 may identify whether the selected first word and second word include a proper noun. For example, the processor 410 may identify a proper noun according to whether the first letter of a word in the selected first word and second word is a capital letter.

When the selected first word or second word includes a proper noun, the processor 410 may generate a pop-up window 2050 including a preset key (or menu) in S1903. For example, the preset key may refer to a key for performing a contact management function.

As illustrated in FIG. 20A, the processor 410 may display the pop-up window 2050 on the touch screen 420. At this time, the processor 410 may receive input for function keys 2051, 2053, 2055, 2057, and 2059 included in the pop-up window 2050 from the user.

The processor 410 may receive input 2001 for a key of "add contact" 2059 of the pop-up window 2050 in S1905. For example, the user may select the key of "add contact" 2059 of the pop-up window 2050 through the tap input (TI).

The processor 410 may perform a contact management function for the selected first word and second word in response to the input 2001 for the pop-up window 2050 in S1707.

According to an embodiment, as illustrated in FIG. 20B, the processor 410 may perform the contact registration function for the proper noun in the selected words. For example, the processor 410 may execute a preset contact management application and perform the contact management function for the proper noun "Sejong" 2011 in the selected words 2011 and 2013 through the contact management application. At this time, the contact management application may be an application stored in the second memory 440.

For example, the processor 410 may input the proper noun "Sejong" 2011 in the selected words to the input window (for example, a name window) of the contact management application as indicated by reference numeral 2011'.

Meanwhile, the processor 410 may select "save" or "cancel" for the input word "Sejong" 2011. For example, the user may register "Sejong" 2011 by the second gesture (TI) for a key of "save" 2030. The user may add or change information on the input proper noun and register the contact. Further, the user may cancel the registration for "Sejong" 2011 by the second gesture (TI) for a key of "cancel" 2035.

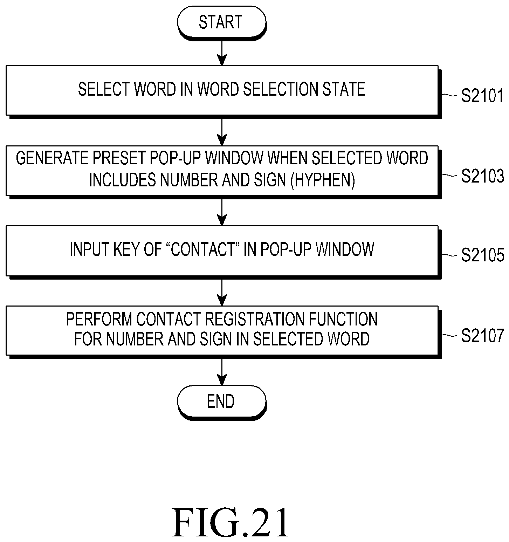

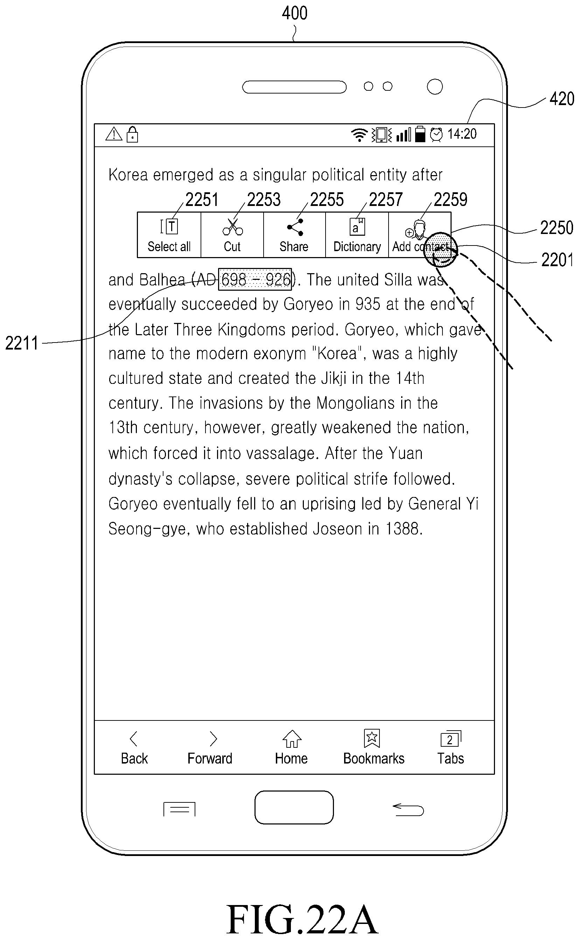

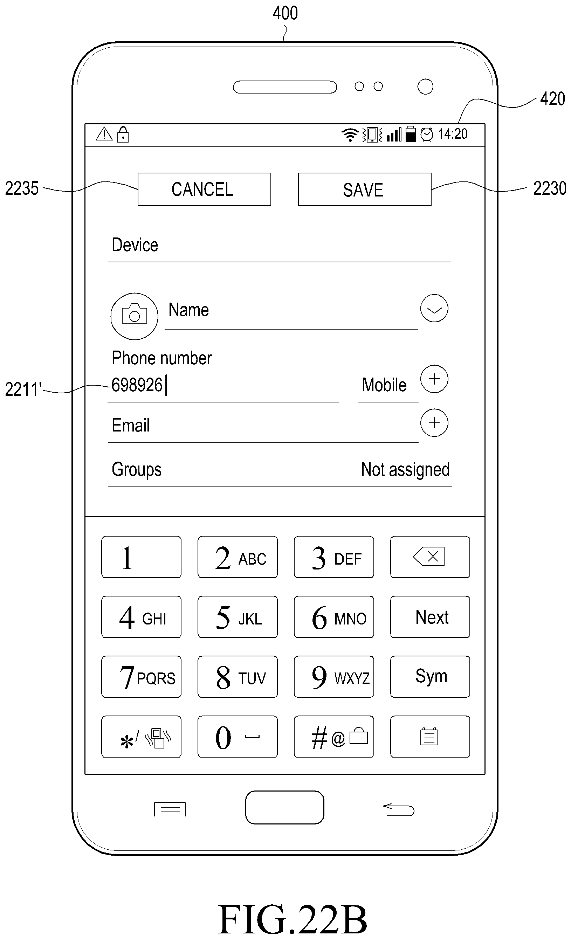

FIG. 21 is a flowchart illustrating a method of configuring a screen of the user interface providing device according to various embodiments of the present disclosure. The embodiment of FIG. 21 is described in more detail with reference to FIGs. 22A and 22B. FIGs. 22A and 22B are block diagrams illustrating the method of configuring the screen of the user interface providing device according to various embodiments of the present disclosure.

The processor 410 may select the first word in response to the first gesture (FP) and select the second word in response to the second gesture (TI) in the first state in S2101.

The processor 410 may identify whether the selected first word and second word include a number and a preset sign. For example, the preset sign may be a hyphen.

When the selected first word and second word include the number and the preset sign, the processor 410 may generate a pop-up window 2050 including a preset key (or menu). For example, the preset key may be a key (or menu) for performing a contact management function.

As illustrated in FIG. 22A, the processor 410 may display the pop-up window 2250 on the touch screen 420. At this time, the processor 410 may receive input for function keys 2251, 2253, 2255, 2257, and 2259 included in the pop-up window 2250 from the user.

The processor 410 may receive input 2201 for a key of "add contact" 2259 of the pop-up window 2250 in S1905. For example, the user may select the key of "add contact" 2259 of the pop-up window 2250 through the tap input (TI).

The processor 410 may perform the contact management function for the selected first word and second word in response to the input 2201 of the pop-up window 2250 in S2107.

According to an embodiment, as illustrated in FIG. 22B, the processor 410 may perform the contact registration function for the number and the preset sign in the selected words. For example, the processor 410 may execute a preset contact management application and perform the contact management function for "698-926" 2211' including numbers and a preset sign in the selected words through the contact management application. At this time, the contact management application may be an application stored in the second memory 440.

For example, the processor 410 may input the word "698-926" 2211 including numbers and the preset sign in the selected words to the input window (for example, a phone number window) of the contact management application as indicated by reference numeral 2211'.

Meanwhile, the processor 410 may select "save" or "cancel" for the input word "698-926" 2211. For example, the user may register "698-926" 2211 by the second gesture (TI) for a key of "save" 2230. The user may add or change information on the input phone number and register the contact. Further, the user may cancel the registration of "698-926" 2211 by the second gesture (TI) for a key of "cancel" 2235.

Each of the components of the electronic device according to the present disclosure may be implemented by one or more components and the name of the corresponding component may vary depending on a type of the electronic device. In various embodiments, the inspection apparatus may include at least one of the above-described elements. Some of the above-described elements may be omitted from the electronic device, or the inspection apparatus may further include additional elements. Further, some of the components of the electronic device according to the various embodiments of the present disclosure may be combined to form a single entity, and thus, may equivalently execute functions of the corresponding elements prior to the combination.

Various embodiments disclosed herein are provided merely to easily describe technical details of the present disclosure and to help the understanding of the present disclosure, and are not intended to limit the scope of the present disclosure. Therefore, it should be construed that all modifications and changes or modified and changed forms based on the technical idea of the present disclosure fall within the scope of the present disclosure.

## Claims

1. An apparatus for providing a user interface, the apparatus comprising:
a touch screen (420);
a pressure sensor (425); and
a processor (410),
wherein the processor (410) is configured to:
identify, using the pressure sensor (425), pressure by a first gesture input to the touch screen (420),
in response to identifying that the pressure by the first gesture input is smaller than or equal to a predetermined value, perform a first function corresponding to the first gesture input, and
in response to identifying that the pressure by the first gesture input is larger than the predetermined value, enter a first state for individually selecting each of a plurality of words in text displayed on the touch screen (420) and perform a second function corresponding to the first gesture input.

2. The apparatus of claim 1, wherein the processor (410) individually selects a first word by the first gesture input and individually selects a second word by a second gesture in the text in the first state.

3. The apparatus of claim 2, wherein at least one word is located between the first word and the second word.

4. The apparatus of claim 2, wherein the processor (410) generates a pop-up window (850) for the first word and the second word and displays the generated pop-up window (850) on the touch screen (410).

5. The apparatus of claim 4, wherein the processor (410) selects words located between the first word and the second word, in response to a touch input for selecting a key of the pop-up window (850).

6. The apparatus of claim 4, wherein the processor (410) copies the first word and the second word in response to a touch input for selecting a key of the pop-up window (850).

7. The apparatus of claim 4, wherein the processor (410) performs a dictionary function for the first word and the second word in response to a touch input for selecting a key of the pop-up window (850).

8. The apparatus of claim 4, wherein the processor (410) performs a web search function for the first word and the second word in response to a touch input for selecting a key of the pop-up window (850).

9. The apparatus of claim 4, wherein, when the first word or the second word includes a number, the processor (410) performs a calculation function for the first word and the second word in response to a touch input for selecting a key of the pop-up window (850).

10. The apparatus of claim 4, wherein, when the first word or the second word includes date information or time information, the processor (410) performs a schedule registration function for the first word and the second word in response to a touch input for selecting a key of the pop-up window (850).

11. The apparatus of claim 4, wherein, when the first word or the second word includes a number and a preset sign, the processor (410) performs a contact registration function for the first word and the second word in response to a touch input for selecting a key of the pop-up window (850).

12. The apparatus of claim 4, wherein, when the first word or the second word includes a proper noun, the processor (410) performs a contact registration function for the first word and the second word in response to a touch input for selecting a key of the pop-up window (850).

13. The apparatus of claim 1, wherein the processor (410) selects at least one third word in the text by a third gesture designating an area.

14. The apparatus of claim 13, wherein the processor (410) determines a rectangular area corresponding to the area designated by the third gesture and selects at least one fourth word included in the rectangular area in the text.

15. A method for an apparatus to provide a user interface, the method comprising:
identifying pressure by a first gesture input to a touch screen (420) of the apparatus;
in response to identifying that the pressure by the first gesture input to the touch screen (420) is smaller than or equal to a predetermined value, performing a first function corresponding to the first gesture input; and
in response to identifying that the pressure by the first gesture input to the touch screen (420) is larger than the predetermined value, entering a first state for individually selecting each of a plurality of words in text displayed on the touch screen (420) and performing a second function corresponding to the first gesture input.

## Patentansprüche

1. Vorrichtung zur Bereitstellung einer Benutzerschnittstelle, wobei die Vorrichtung umfasst:
einen Berührungsbildschirm (420);
einen Drucksensor (425); und
einen Prozessor (410);
wobei der Prozessor (410) konfiguriert ist, um:
mithilfe des Drucksensors (425) Druck durch eine erste Gesteneingabe auf den Berührungsbildschirm (420) zu identifizieren,
in Reaktion auf ein Identifizieren, dass der Druck durch die erste Gesteneingabe kleiner oder gleich einem vorgegebenen Wert ist, eine erste Funktion auszuführen, die der ersten Gesteneingabe entspricht, und
in Reaktion auf ein Identifizieren, dass der durch die erste Gesteneingabe ausgeübte Druck größer als der vorgegebene Wert ist, in einen ersten Zustand zum individuellen Auswählen jedes einer Vielzahl von Wörtern in auf dem Berührungsbildschirm (420) angezeigtem Text einzutreten und eine zweite Funktion auszuführen, die der ersten Gesteneingabe entspricht.

2. Vorrichtung nach Anspruch 1, wobei der Prozessor (410) durch die erste Gesteneingabe ein erstes Wort individuell auswählt und durch eine zweite Geste im Text im ersten Zustand ein zweites Wort individuell auswählt.

3. Vorrichtung nach Anspruch 2, wobei sich mindestens ein Wort zwischen dem ersten Wort und dem zweiten Wort befindet.

4. Vorrichtung nach Anspruch 2, wobei der Prozessor (410) ein Pop-up-Fenster (850) für das erste Wort und das zweite Wort generiert und das generierte Pop-up-Fenster (850) auf dem Berührungsbildschirm (410) anzeigt.

5. Vorrichtung nach Anspruch 4, wobei der Prozessor (410) in Reaktion auf eine Berührungseingabe zum Auswählen einer Taste des Pop-up-Fensters (850) Wörter, die sich zwischen dem ersten Wort und dem zweiten Wort befinden, auswählt.

6. Vorrichtung nach Anspruch 4, wobei der Prozessor (410) in Reaktion auf eine Berührungseingabe zum Auswählen einer Taste des Pop-up-Fensters (850) das erste Wort und das zweite Wort kopiert.

7. Vorrichtung nach Anspruch 4, wobei der Prozessor (410) in Reaktion auf eine Berührungseingabe zum Auswählen einer Taste des Pop-up-Fensters (850) eine Wörterbuchfunktion für das erste Wort und das zweite Wort ausführt.

8. Vorrichtung nach Anspruch 4, wobei der Prozessor (410) in Reaktion auf eine Berührungseingabe zum Auswählen einer Taste des Pop-up-Fensters (850) eine Internetsuchfunktion für das erste Wort und das zweite Wort ausführt.

9. Vorrichtung nach Anspruch 4, wobei der Prozessor (410) in Reaktion auf eine Berührungseingabe zum Auswählen einer Taste des Pop-up-Fensters (850), wenn das erste Wort oder das zweite Wort eine Nummer enthält, eine Berechnungsfunktion für das erste Wort und das zweite Wort ausführt.

10. Vorrichtung nach Anspruch 4, wobei der Prozessor (410) in Reaktion auf eine Berührungseingabe zum Auswählen einer Taste des Pop-up-Fensters (850), wenn das erste Wort oder das zweite Wort eine Datumsinformation oder eine Zeitinformation enthält, eine Planungsregistrierungsfunktion für das erste Wort und das zweite Wort ausführt.

11. Vorrichtung nach Anspruch 4, wobei der Prozessor (410) in Reaktion auf eine Berührungseingabe zum Auswählen einer Taste des Pop-up-Fensters (850), wenn das erste Wort oder das zweite Wort eine Nummer und ein voreingestelltes Zeichen enthält, eine Kontaktregistrierungsfunktion für das erste Wort und das zweite Wort ausführt.

12. Vorrichtung nach Anspruch 4, wobei der Prozessor (410) in Reaktion auf eine Berührungseingabe zum Auswählen einer Taste des Pop-up-Fensters (850), wenn das erste Wort oder das zweite Wort ein korrektes Nomen enthalten, eine Kontaktregistrierungsfunktion für das erste Wort und das zweite Wort ausführt.

13. Vorrichtung nach Anspruch 1, wobei der Prozessor (410) mindestens ein drittes Wort im Text durch eine dritte Geste, die einen Bereich bezeichnet, auswählt.

14. Vorrichtung nach Anspruch 13, wobei der Prozessor (410) einen rechteckigen Bereich, der dem durch die dritte Geste bezeichneten Bereich entspricht, bestimmt, und mindestens ein viertes Wort, das in dem rechteckigen Bereich im Text enthalten ist, auswählt.

15. Verfahren für eine Vorrichtung zur Bereitstellung einer Benutzerschnittstelle, wobei das Verfahren umfasst: ein Identifizieren eines Drucks durch eine erste Gesteneingabe auf einem Berührungsbildschirm (420) der Vorrichtung; in Reaktion auf das Identifizieren, dass der durch die erste Gesteneingabe auf den Berührungsbildschirm (420) eingegebene Druck kleiner oder gleich einem vorgegebenen Wert ist, ein Ausführen einer ersten Funktion, die der ersten Gesteneingabe entspricht; und
in Reaktion auf ein Identifizieren, dass der durch die erste Gesteneingabe auf den Berührungsbildschirm (420) eingegebene Druck größer als der vorgegebene Wert ist, ein Eintreten in einen ersten Zustand zum individuellen Auswählen jedes einer Vielzahl von Wörtern in auf dem Berührungsbildschirm (420) angezeigtem Text und ein Ausführen einer zweiten Funktion, die der ersten Gesteneingabe entspricht.

## Revendications

1. Appareil pour fournir une interface utilisateur, l'appareil comprenant :
un écran tactile (420) ;
- un capteur de pression (425) ; et
un processeur (410) ;
dans lequel le processeur (410) est configuré pour :
identifier, à l'aide du capteur de pression (425), la pression par une première entrée de geste sur l'écran tactile (420),
en réponse à l'identification que la pression par la première entrée de geste est inférieure ou égale à une valeur prédéterminée, exécuter une première fonction correspondant à la première entrée de geste, et
en réponse à l'identification que la pression par la première entrée de geste est supérieure à la valeur prédéterminée, entrer dans un premier état destiné à sélectionner individuellement chacun d'une pluralité de mots dans le texte affiché sur l'écran tactile (420) et exécuter une deuxième fonction correspondant à la première entrée de geste.

2. Appareil selon la revendication 1, dans lequel le processeur (410) sélectionne individuellement un premier mot par la première entrée de geste et sélectionne individuellement un deuxième mot par un deuxième geste dans le texte dans le premier état.

3. Appareil selon la revendication 2, dans lequel au moins un mot se trouve entre le premier mot et le deuxième mot.

4. Appareil selon la revendication 2, dans lequel le processeur (410) génère une fenêtre contextuelle (850) pour le premier mot et le deuxième mot et affiche la fenêtre contextuelle générée (850) sur l'écran tactile (410).

5. Appareil selon la revendication 4, dans lequel le processeur (410) sélectionne des mots situés entre le premier mot et le deuxième mot, en réponse à une entrée tactile destinée à une touche de la fenêtre contextuelle (850).

6. Appareil selon la revendication 4, dans lequel le processeur (410) copie le premier mot et le deuxième mot en réponse à une entrée tactile destinée à sélectionner une touche de la fenêtre contextuelle (850).

7. Appareil selon la revendication 4, dans lequel le processeur (410) exécute une fonction de dictionnaire pour le premier mot et le deuxième mot en réponse à une entrée tactile destinée à sélectionner une touche de la fenêtre contextuelle (850).

8. Appareil selon la revendication 4, dans lequel le processeur (410) exécute une fonction de recherche Web pour le premier mot et le deuxième mot en réponse à une entrée tactile destinée à sélectionner une touche de la fenêtre contextuelle (850).

9. Appareil selon la revendication 4, dans lequel, lorsque le premier mot ou le deuxième mot comprend un nombre, le processeur (410) exécute une fonction de calcul pour le premier mot et le deuxième mot en réponse à une entrée tactile destinée à sélectionner une touche de la fenêtre contextuelle (850).

10. Appareil selon la revendication 4, dans lequel, lorsque le premier mot ou le deuxième mot comprend des informations de date ou des informations d'heure, le processeur (410) exécute une fonction d'enregistrement de programme pour le premier mot et le deuxième mot en réponse à une entrée tactile destinée à sélectionner un touche de la fenêtre contextuelle (850).

11. Appareil selon la revendication 4, dans lequel, lorsque le premier mot ou le deuxième mot comprend un nombre et un signe prédéfini, le processeur (410) exécute une fonction d'enregistrement de contact pour le premier mot et le deuxième mot en réponse à une entrée tactile destinée à sélectionner une touche de la fenêtre contextuelle (850).

12. Appareil selon la revendication 4, dans lequel, lorsque le premier mot ou le deuxième mot comprend un nom propre, le processeur (410) exécute une fonction d'enregistrement de contact pour le premier mot et le deuxième mot en réponse à une entrée tactile destinée à sélectionner une touche de la fenêtre contextuelle (850).

13. Appareil selon la revendication 1, dans lequel le processeur (410) sélectionne au moins un troisième mot dans le texte par un troisième geste désignant une zone.

14. Appareil selon la revendication 13, dans lequel le processeur (410) détermine une zone rectangulaire correspondant à la zone désignée par le troisième geste et sélectionne au moins un quatrième mot inclus dans la zone rectangulaire dans le texte.

15. Procédé pour permettre à un appareil de fournir une interface utilisateur, le procédé comprenant : l'identification d'une pression par une première entrée de geste sur un écran tactile (420) de l'appareil, en réponse à l'identification que la pression par la première entrée de geste sur l'écran tactile (420) est inférieure ou égale à une valeur prédéterminée, l'exécution d'une première fonction correspondant à la première entrée de geste ; et
en réponse à l'identification que la pression par la première entrée de geste sur l'écran tactile (420) est supérieure à la valeur prédéterminée, l'entrée dans un premier état destiné à sélectionner individuellement chacun d'une pluralité de mots dans un texte affiché sur l'écran tactile (420) et l'exécution d'une deuxième fonction correspondant à la première entrée de geste.
